# EUROPEAN PATENT APPLICATION

(11) **EP 4 734 609 A1**
(43) Date of publication of application: **29.04.2026**
(21) Application number: 24844239.4
(22) Date of filing: 12.03.2024
(51) Int. Cl.: H04W 36/06

(54) **VOICE CALL METHOD, AND DEVICE**

(30) Priority: 26.07.2023 CN 202310929880
(71) Applicant: Honor Device Co., Ltd., Shenzhen, Guangdong 518040 (CN)
(72) Inventor: LI, Haibo, Shenzhen, Guangdong 518040 (CN)
(74) Representative: Goddar, Heinz J.
(86) International application number: PCT/CN2024/081145
(87) International publication number: WO 2025/020542

(57) **Abstract**

This application provides a voice call method and devices, and relates to the field of wireless communication technologies. The method includes: redialing in an IMS in a preset manner after failing to initiate a call in an IMS domain, and trying to re-set up a voice call service in the IMS domain. The preset manner may include: directly redialing in the IMS domain; or, continuing trying to redial in the IMS domain within a timing duration, until time expires or the redial is successful; or, continuing trying to redial in the IMS domain within a preset count, until a redial count exceeds the preset count or the redial is successful. The method can resolve a problem of poor voice call quality since a call that can be clearly successfully redialed in an IMS domain is switched to a CS domain.

## Description

This application claims priority to Chinese Patent Application No. 202310929880X, filed with the China National Intellectual Property Administration on July 26, 2023 and entitled "VOICE CALL METHOD AND DEVICES", which is incorporated herein by reference in its entirety.

### TECHNICAL FIELD

This application relates to the field of wireless communication technologies, and in particular, to a voice call method and devices.

### BACKGROUND

As a basic service in communication, a voice call needs to be supported in various wireless networks. Current device-supported communication technologies include a 2^{nd}-generation mobile communication technology (2^{nd}-generation mobile communication technology, 2G), a 3^{rd}-generation mobile communication technology (3rd-generation mobile communication technology, 3G), a 4^{th}-generation mobile communication technology (4^{th}-generation mobile communication technology, 4G), and a 5^{th}-generation mobile communication technology (5^{th}-generation mobile communication technology, 5G). In a 2G global system for mobile communications (Global System for Mobile Communications, GSM) system and a 3G university mobile telecommunications system (University Mobile Telecommunications System, UMTS) system, a voice call is implemented in a circuit switched (circuit swtiched, CS) domain. However, in a 4G long term evolution (Long Term Evolution, LTE) system and a 5G new radio (new radio, NR) system, a circuit switched (circuit switched, CS) domain is not provided, and a voice call is implemented in a packet switched (packet switched, PS) domain. Specifically, the 4G LTE system implements a voice over LTE (voice over LTE, VoLTE) based on an Internet protocol multimedia subsystem (internet protocol multimedia subsystem, IMS). The 5G NR system implements a voice over new radio (Voice over New Radio, VoNR) service based on the IMS. The IMS is proposed by a 3^{rd}-generation partnership project (3^{rd}-generation partnership project, 3GPP) standard organization based on a release R5, and is a general network architecture for providing a multimedia service based on an Internet protocol (internet protocol, IP) network.

In a current voice call scenario, a problem that call initiation fails due to a temporary network fault often occurs. To improve a call success rate, an underlying modem (modem) of a user equipment (user equipment, UE) tries to switch a network system or switch domains for redial (redial) according to a cause for failure of call initiation and a call stage. For example, assuming that 503 (a service unavailable message (service unavailable)) returned by a network is received after a VoLTE call is initiated, the UE performs CS redial (CS redial).

However, with the gradual maturity of a 5G network, operators basically have given up network maintenance for 2G and 3G mobile communication systems. Therefore, a call effect in the CS domain is relatively poor. For example, problems such as a long call initiation time and poor voice call quality easily occur. At the same time, an IMS domain is a core control domain of a 5G voice call service. Under the IMS architecture, user experience on voice quality and connection delay is greatly improved. However, there is no suitable solution currently to improve the problem of failure of call initiation or poor call quality.

### SUMMARY

Embodiments of this application provide a voice call method and devices. By continuing trying, after call initiation fails in an IMS domain, to redial in the IMS domain within a timing duration until time expires or the redial is successful, a problem of poor voice call quality since a call that can be clearly successfully redialed in an IMS domain is switched to a CS domain can be resolved.

According to a first aspect, a voice call method is provided. The method is applied to an electronic device, and includes:
receiving an IMS domain call cancellation message, where the IMS domain call cancellation message includes cause information for indicating call cancellation in an Internet protocol multimedia subsystem (IMS) domain; and
performing re-registration in the IMS domain when the cause information is first information, where the re-registration is used for performing, by the electronic device, a voice call service in the IMS domain, and the first information is used for indicating that an IMS service for the electronic device is restored within a first duration.

In a possible implementation, the electronic device herein may be an electronic device initiating a voice call, and may correspond to a calling UE below.

In a possible implementation, the electronic device may receive an IMS domain call cancellation message forwarded by an access network device. The IMS domain call cancellation message may be a message forwarded by the access network device from a core network device. To be specific, the access network device may forward, in a transparent transmission manner, the IMS domain call cancellation message sent by the core network device to the electronic device.

In a possible implementation, an IMS service may refer to setting up, by a core network, an IMS domain default bearer corresponding to the electronic device. The IMS domain default bearer may be used by the electronic device to set up the voice call service in the IMS domain.

With reference to the first aspect, in some implementations of the first aspect, the method further includes:
switching to a circuit switched (CS) domain for redial when the cause information is second information, where the redial is used for the electronic device to perform a voice call service in the CS domain, and the second information is used for indicating that the IMS service for the electronic device fails to be restored within the first duration.

In a possible implementation, the IMS domain call cancellation message may include, for example, a service unavailable message (service unavailable) 503, or IMS bearer inactivation information. The IMS domain call cancellation message may carry cause information for call cancellation of the electronic device in the IMS domain. The cause information may be divided into first information and second information according to whether the IMS service may be restored within the first duration. The first information, for example, may correspond to esm_cause=39 in the following embodiment. The first information is used for indicating that re-activation is needed. The second information, for example, may correspond to esm_cause=38 in the following embodiment, or another value. The second information may be used for indicating content other than that re-activation is needed.

In a possible implementation, the first duration may be flexibly set as needed. Usually, in order not to cause a serious delay to a voice call service of a user, the first duration may be set to a short period of time, for example, 3 s or 5 s.

According to the voice call method provided in this implementation, after call initiation fails in an IMS domain, an electronic device determines, according to cause information returned by a network side, whether an IMS service may be restored within a first duration, tries to redial in the IMS domain if the IMS service can be restored within the first duration, and switches to a CS domain to perform a voice call service if the IMS service cannot be restored within the first duration. The method can improve a probability that a voice call service is successfully set up in the IMS domain. In particular, a voice call service that can be clearly performed in the IMS domain can be prevented from being directly switched to the CS domain with poor call quality, resulting in poor call experience for a user.

With reference to the first aspect, in some implementations of the first aspect, the performing re-registration in the IMS domain when the cause information is first information specifically includes:
starting a timer, where the timer is set with a timing duration; and
performing re-registration in the IMS domain within the timing duration.

In an implementation, being within the timing duration may refer to being before the timing duration is reached.

With reference to the first aspect, in some implementations of the first aspect, the timing duration is less than or equal to the first duration.

With reference to the first aspect, in some implementations of the first aspect, the method further includes:
switching to the CS domain for redial and performing a voice call service in the CS domain if the timing duration is reached and the re-registration in the IMS domain still fails; or
redialing in the IMS domain and performing a voice call service in the IMS domain if the timing duration is not reached and the re-registration in the IMS domain is successful.

That the re-registration of the electronic device in the IMS domain still fails may mean that when the electronic device tries to re-set up an IMS default bearer with a core network, setup of the IMS default bearer fails.

In a possible implementation, the timing duration of the timer may be set to be less than the first duration.

With reference to the first aspect, in some implementations of the first aspect, the method further includes:
starting a counter, where the counter is configured to count, upon call cancellation of the electronic device in the IMS domain, re-registrations of the electronic device in the IMS domain; and
performing re-registration in the IMS domain.

With reference to the first aspect, in some implementations of the first aspect, the method further includes:
switching to a CS domain for redial and performing a voice call service in the CS domain if a preset count is reached and the re-registration in the IMS domain still fails; or
redialing in the IMS domain and performing a voice call service in the IMS domain if a preset count is not reached and the re-registration in the IMS domain is successful.

With reference to the first aspect, in some implementations of the first aspect, the method further includes:
residing in a new radio (NR) system, and having registered in an NR IMS domain; or,
residing in a long term evolution (LTE) system, and having registered in an LTE IMS domain.

With reference to the first aspect, in some implementations of the first aspect, the receiving an IMS domain call cancellation message specifically includes:
receiving the IMS domain call cancellation message forwarded by an access network device from a core network device.

With reference to the first aspect, in some implementations of the first aspect, the access network device is an access network device of a 5^{th}-generation mobile communication (5G) network, or an access network device of a 4^{th}-generation mobile communication (4G) network.

With reference to the first aspect, in some implementations of the first aspect, the switching to a CS domain for redial when the cause information is second information specifically includes:
selecting the CS domain;
sending an extended service request message to the LTE system, where the extended service request message is used for requesting the LTE system to issue a 2^{nd}-generation (2G) frequency point or a 3^{rd}-generation (3G) frequency point;
receiving the 2G frequency point or the 3G frequency point sent by the LTE system; and
initiating, in the CS domain, a call by using the 2G frequency point or the 3G frequency point.

With reference to the first aspect, in some implementations of the first aspect, when the electronic device resides in the NR system and has registered in the NR IMS domain, the method further includes:
receiving a dial operation entered by a user;
selecting the NR IMS domain in response to the dial operation;
sending a session invitation message to the NR system, where the session invitation message is used for requesting to set up a session connection with the core network device;
receiving a provisional response message forwarded by the NR system from the core network device, where the provisional response message is used for indicating that a called electronic device has received the session invitation message; and
receiving a fallback indication message sent by the NR system, where the fallback indication message is used for indicating that the electronic device falls back to the LTE system.

The called electronic device may be an electronic device called by a voice, and may correspond to a called UE below.

With reference to the first aspect, in some implementations of the first aspect, the method further includes:
accessing the LTE system by radio resource control (RRC);
setting up a tracking area update (TAU) procedure with the LTE system, where the TAU procedure includes a bearer that supports the electronic device to complete registration in the IMS domain;
setting up, with the LTE system, a dedicated bearer in the IMS domain for performing a voice call service; and
receiving an IMS domain call cancellation message forwarded by the LTE system from the core network device, where the IMS domain call cancellation message includes cause information for indicating call cancellation of the electronic device in the IMS domain.

With reference to the first aspect, in some implementations of the first aspect, the switching to a CS domain for redial when the cause information is second information specifically includes:
selecting the CS domain;
sending an extended service request message to the LTE system, where the extended service request message is used for requesting the LTE system to issue a 2^{nd}-generation (2G) frequency point or a 3^{rd}-generation (3G) frequency point;
receiving the 2G frequency point or the 3G frequency point sent by the LTE system; and
initiating, in the CS domain, a call by using the 2G frequency point or the 3G frequency point.

According to a second aspect, a voice call method is provided. The method is applied to an access network device, and includes:
receiving an IMS domain call cancellation message sent by a core network device, where the IMS domain call cancellation message includes cause information for indicating call cancellation in an IMS domain; and
forwarding the IMS domain call cancellation message to an electronic device, and enabling the electronic device to perform re-registration in the IMS domain when the cause information is first information, where the re-registration is used for performing, by the electronic device, a voice call service in the IMS domain, and the first information is used for indicating that an IMS service for the electronic device is restored within a first duration. With reference to the second aspect, in some implementations of the second aspect, when the cause information is second information, the method further includes:
enabling the electronic device to be switched to a CS domain for redial, where the redial is used for the electronic device to perform a voice call service in the CS domain, and the second information is used for indicating that the IMS service for the electronic device fails to be restored within the first duration.

With reference to the second aspect, in some implementations of the second aspect, the method further includes:
residing, by the electronic device, in an NR system, and having registered in an NR IMS domain; or,
residing, by the electronic device, in an LTE system, and having registered in an LTE IMS domain.

With reference to the second aspect, in some implementations of the second aspect, the access network device is an access network device of a 5G network, or the access network device is an access network device of a 4G network.

With reference to the second aspect, in some implementations of the second aspect, the method further includes:
receiving, by the access network device of the 4G network, the IMS domain call cancellation message sent by the core network device, where the IMS domain call cancellation message includes cause information for indicating call cancellation of the electronic device in an IMS domain; and
forwarding, by the access network device of the 4G network, the IMS domain call cancellation message to the electronic device.

With reference to the second aspect, in some implementations of the second aspect, when the cause information is second information, the enabling the electronic device to be switched to a CS domain for redial specifically includes:
receiving, by the access network device of the 4G network, an extended service request message sent by the electronic device, where the extended service request message is used for requesting the LTE system to issue a 2G frequency point or a 3G frequency point; and
sending, by the access network device of the 4G network, the 2G frequency point or the 3G frequency point to the electronic device, where the 2G frequency point or the 3G frequency point is used for initiating a call by the electronic device in the CS domain.

With reference to the second aspect, in some implementations of the second aspect, the method further includes:
receiving, by the access network device, a session invitation message sent by the electronic device in the IMS domain, where the session invitation message is used for requesting to set up a session connection with the core network device;
forwarding, by the access network device, the session invitation message to the core network device;
receiving, by the access network device, a provisional response message sent by the core network device, where the provisional response message is used for indicating that the core network device has received the session invitation message; and
forwarding, by the access network device, the provisional response message to the electronic device.

In an implementation, the access network device herein may send the provisional response message to the electronic device in a transparent transmission manner.

With reference to the second aspect, in some implementations of the second aspect, when the electronic device resides in the NR system and has registered in the NR IMS domain, the method further includes:
sending, by the access network device of the 5G network, a fallback indication message to the electronic device, where the fallback indication message is used for indicating that the UE falls back to the LTE system.

With reference to the second aspect, in some implementations of the second aspect, the method further includes:
setting up, by the access network device of the 4G network, a TAU procedure with the electronic device after the electronic device accesses the LTE system by RRC, where the TAU procedure includes a bearer that supports the electronic device to complete registration in the IMS domain; and
setting up, by the access network device of the 4G network, the TAU procedure with the core network device;
setting up, by the access network device of the 4G network and the electronic device, a dedicated bearer for performing a voice call service in the IMS domain; and
setting up, by the access network device of the 4G network and the core network device, a dedicated bearer for performing a voice call service in the IMS domain;
receiving, by the access network device of the 4G network, the IMS domain call cancellation message sent by the core network device, where the IMS domain call cancellation message includes cause information for indicating call cancellation of the electronic device in an IMS domain; and
sending, by the access network device of the 4G network, the IMS domain call cancellation message to the electronic device.

With reference to the second aspect, in some implementations of the second aspect, when the cause information is second information, the enabling the electronic device to be switched to a CS domain for redial specifically includes:
receiving, by the access network device of the 4G network, an extended service request message sent by the electronic device, where the extended service request message is used for requesting the LTE system to issue a 2G frequency point or a 3G frequency point; and
sending, by the access network device of the 4G network, the 2G frequency point or the 3G frequency point to the electronic device, where the 2G frequency point or the 3G frequency point is used for initiating a call by the electronic device in the CS domain.

According to a third aspect, an electronic device is provided. The electronic device supports a voice call service in an IMS domain and a CS domain. The electronic device includes:
one or more processors; and
one or more memories.

The one or more memories store one or more computer programs. The one or more computer programs include instructions. When executed by the one or more processors, the instructions enable the electronic device to perform the method in any implementation of the foregoing first aspect.

According to a fourth aspect, an access network device is provided, including:
one or more processors; and
one or more memories.

The one or more memories store one or more computer programs. The one or more computer programs include instructions. When executed by the one or more processors, the instructions enable the access network device to perform the method in any implementation of the foregoing second aspect.

According to a fifth aspect, a computer-readable storage medium is provided. The computer-readable storage medium stores computer-executable program instructions. When run on a computer, the computer-executable program instructions enable the computer to perform the method in any implementation of the foregoing first or second aspect.

According to a sixth aspect, a computer program product is provided. The computer program product includes a computer program code. When run on a computer, the computer program code enables the computer to perform the method in any implementation of the foregoing first or second aspect.

### BRIEF DESCRIPTION OF DRAWINGS

FIG. 1 is a schematic flowchart of failure of call initiation in VoLTE;
FIG. 2A and FIG. 2B are schematic diagrams of an IMS system architecture and a CS system architecture to which a voice call method according to an embodiment of this application is applicable, respectively;
FIG. 3 is a schematic structural diagram of a terminal device 100 according to an embodiment of this application;
FIG. 4 is a block diagram of a software structure of a terminal device 100 according to an embodiment of this application;
FIG. 5A to FIG. 5D are schematic diagrams of related GUIs which may be involved in an implementation process of some voice call methods according to an embodiment of this application;
FIG. 6 is a schematic flowchart of a voice call method according to an embodiment of this application;
FIG. 7A and FIG. 7B are a schematic flowchart of another voice call method according to an embodiment of this application;
FIG. 8A and FIG. 8B are a schematic flowchart of still another voice call method according to an embodiment of this application;
FIG. 9A and FIG. 9B are a schematic flowchart of still another voice call method according to an embodiment of this application; and
FIG. 10 is a schematic flowchart of still another voice call method according to an embodiment of this application.

### DESCRIPTION OF EMBODIMENTS

It should be noted that terms used in implementations of embodiments of this application are merely used to explain particular embodiments of this application, but are not intended to limit this application. In the descriptions of the embodiments of this application, "/" means "or" unless otherwise specified. For example, A/B may represent A or B. In this specification, "and/or" describes only an association relationship for describing associated obstacles and indicates that three relationships may exist. For example, A and/or B may represent: A exists alone, A and B exist at the same time, and B exists alone. In addition, in the descriptions of the embodiments of this application, unless otherwise specified, "a plurality of" means two or more than two, and "at least one" and "one or more" mean one, two, or more than two.

Hereinafter, the terms "first" and "second" are for descriptive purposes only and are not to be construed as indicating or implying their relative importance or implicitly specifying the number of indicated technical features. Therefore, a feature limited by "first" or "second" may explicitly or implicitly include one or more such features.

Reference to "an embodiment" or "some embodiments" described in this specification means that a specific characteristic, structure, or feature described in combination with this embodiment is included in one or more embodiments of this application. Therefore, phrases "in one embodiment", "in some embodiments", "in some other embodiments", "in some additional embodiments", and the like described in different places in this specification do not necessarily refer to the same embodiment, but mean "one or more but not all embodiments", unless otherwise specifically emphasized. The terms "include", "comprise", "have", and variants thereof all mean "include but are not limited to", unless otherwise specifically emphasized in other manners.

The technical solution of this application is described in detail with reference to specific embodiments below. The following specific embodiments may be mutually combined, and same or similar concepts or processes may not be repeatedly described in some embodiments.

For ease of understanding, some signaling and other terms that may be involved in an embodiment of this application will be first described below.

### 1. Invite (invite) signaling

The signaling represents that a calling UE initiates a session request to invite another user to join a session, or may be used for updating a session after call setup (in this case, the invite may alternatively be referred to as Re-invite). For ease of description, in this embodiment of this application, the invite signaling may alternatively be described as an invite message, or may be described as a session invitation message.

The calling UE in this specification may alternatively be described as an electronic device. The electronic device is a device for initiating a voice call.

### 2. 100 trying signaling

The 100 trying signaling is a provisional response signaling. In this embodiment of this application, the 100 trying signaling may be used for indicating that a called UE has received a request message sent by the calling UE. For ease of description, in this embodiment of this application, the 100 trying signaling may alternatively be described as 100 trying, or may be described as a provisional response message.

### 3. Evolved packet system fallback (evolved packet system fallback, EPS FB)

The EPS FB means that when 5G does not have a VoNR condition, a voice call service falls back from 5G to 4G, and continuity of the voice call service is ensured according to VoLTE. To be specific, the UE switches from a 5G stand alone (standa lone, SA) cell to a 4G cell to perform a VoLTE call.

### 4. Tracking area update (tracking area update, TAU)

In this embodiment of this application, if the voice call service falls back from 5G to 4G, and a UE moves from a tracking area (tracking area, TA) of LTE to another TA, position registration needs to be performed again on the new TA to notify a network to change a storage position relationship of a mobile station. The process is the TAU. Specifically, when being switched to a target LTE cell, the UE initiates a TAU request to an e NodeB (e NodeB, eNB). If a TAU reject message from the eNB is received, or a response message of the TAU request is not received within a preset duration (to be specific, the TAU is unresponsive), it is determined that the UE fails to reside on the target LTE cell. Otherwise, it is determined that the UE successfully resides on the target LTE cell.

### 5. Quality of service class identifier (quality of service class identifier, QCI)

The QCI is a parameter used by a system for identifying a transmission characteristic of a service data packet. A protocol 23203 defines QCI values corresponding to different bearer services. The QCI ranges from 1 to 9, respectively corresponding to different resource types, different priorities, different delays, and different packet loss rates. To ensure that an application service can run normally, a matching QCI value needs to be configured for the service (a network side usually provides a corresponding interface). In this specification,

QCI=1, indicating an IMS domain voice call service bearer. In a call initiation process, if a voice dedicated bearer of QCI=1 is not set up in time, the call may easily fail, and consequently, a voice call is not put through.

QCI=2, indicating a video service bearer.

QCI=5, indicating an IMS default bearer.

QCI=9, indicating a data service bearer.

In this embodiment of this application, it is mainly involved that QCI=1, QCI=5, and QCI=9.

### 6. Evolved packet system (evolved packet system, EPS) bearer identity (eps bearer identity, EBI)

The EBI is an EPS bearer identity. The EPS bearer is a data transmission channel in a communication system (such as a 4G network). An EPS bearer in an active (active) state is a data transmission channel that is already set up in a communication system and has particular QoS. In the communication system (such as the 4G network), each EPS bearer has an EPS bearer identity (EBI), and EPS bearer state information is used for identifying whether a bearer corresponding to each EBI exists.

In a moving process, the UE may be switched from a 5G network to an EPS network. To ensure service experience of the UE, a QoS flow of the UE may be mapped to the EPS bearer, to ensure that a service of the UE is not interrupted after being switched to the EPS network.

In this embodiment of this application, different EBI values may be preset to respectively indicate that QCI=1, QCI=5, and QCI=9. For example, an EBI of 5 (or EBI#5) may be preset to indicate that QCI=5, an EBI of 7 (or EBI#7) may be preset to indicate that QCI=1, and an EBI of 6 (or EBI#6) may be preset to indicate that QCI=9. Alternatively, other EBI identities (for example, a, b, and c) may be used for respectively indicating that QCI=1, QCI=5, and QCI=9, and so on. This is not limited in this embodiment of this application.

### 7. Packet data network (packet data network, PDN)

In a strict sense, the PDN is divided into an internal PDN and an external PDN in a mobile communication system: The internal PDN is a packet data network in an EPS, and is network communication between EPS system entities (such as a mobile management entity (mobile managenment entity, MME), a home subscriber server (home subscriber server, HSS), a serving gateway (serving gateway, SGW), a PDN gateway (PDN gateway, PGW), and a policy and charging rules function (policy and charging rules function, PCRF) entity). The external PDN is a packet data network outside the EPS, for example, a 3rd generation partnership project (3rd generation partnership project, 3GPP) network CDMA1X, the Internet (internet), the Internet of things (internet of things, IoT), a VoLTE service (IMS), an industry application (such as a bank line and a securities line), and a non-3GPP network worldwide interoperability for microwave access (worldwide interoperability for microwave access, WiMAX). The internal PDN and the external PDN are divided by using the PGW in the EPS.

### 8. Data service (data service, DS)

In this embodiment of this application, a DS module and an IMS module are both self-defined and divided modules inside a chip, and are closely associated. For ease of description, in the following embodiment, a DS submodule is owned in a DS, radio resource control (Radio Resource Control, RRC), and non-access stratum (non-access stratum, NAS) module. The DS, RRC, and NAS module is considered as an integral module, including the DS submodule, an RRC submodule, and an NAS submodule. These submodules may at least separately perform their existing functions.

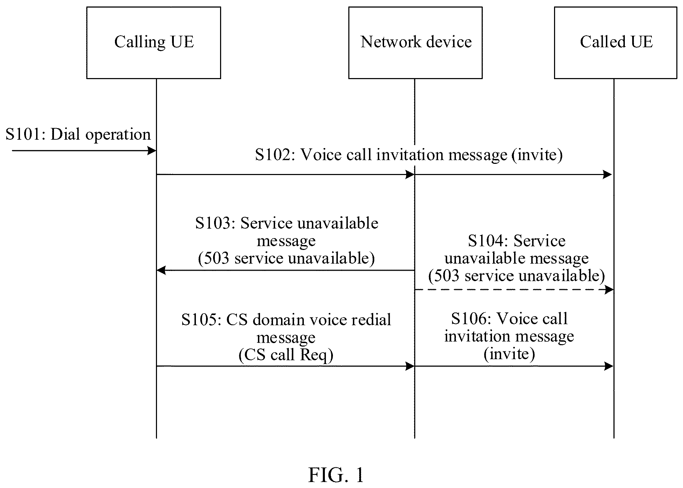

For example, FIG. 1 shows a schematic flowchart of failure of call initiation in VoLTE. The procedure may specifically include the following steps:
S101: A calling UE receives a dial operation entered by a user.
S102: The calling UE sends a voice call invitation message (invite) to a called UE via a network device.

The network device herein may be a core network device. It should be noted that in the following embodiments of this application, a core network may be a collective name of a core network and an IMS network, and the core network device may be a collective name of a core network device and an IMS device. To be specific, for ease of understanding, the core network device in the following embodiments of this application may have both a function of the core network and an IMS function.

S103: The network device sends a service unavailable message to the calling UE.

The service unavailable message may be: 503 service unavailable.

Optionally, the procedure may further include step S104. To be specific, the network device sends a service unavailable message to the called UE.

S105: The calling UE sends a CS domain redial message (CS call Req) to the network device.

S106: The network device sends a voice call invitation message (invite) to the called UE in response to the CS domain redial message (CS call Req).

It may be learned according to the embodiment in FIG. 1 that, after the calling UE fails to initiate a call in an IMS domain, the domain is directly switched to a CS domain. To be specific, a 2G or 3G network is accessed for redial. However, there may be a plurality of problems of failure of call initiation in the IMS domain. Some of the problems may be restored by the core network or may be resolved within a first duration after debugging. Consequently, after a cause for failure of the call initiation in the IMS domain is resolved, the calling UE actually can still successfully call in the IMS domain. Therefore, if call initiation fails in the IMS domain, the domain is directly switched to the CS domain for redial. A successful call in the IMS domain may be missed. A voice call in the CS domain has poor quality, and voice call experience of a user is further affected.

In view of this, embodiments of this application provide a voice call method and devices. According to the method, by continuing trying, after call initiation fails in an IMS domain, to redial in the IMS domain instead of directly switching to a CS domain for redial, a problem of switching a call that can be clearly successfully redialed in an IMS domain to a CS domain with poor voice call quality can be resolved.

The method provided in this embodiment of this application is described in detail below.

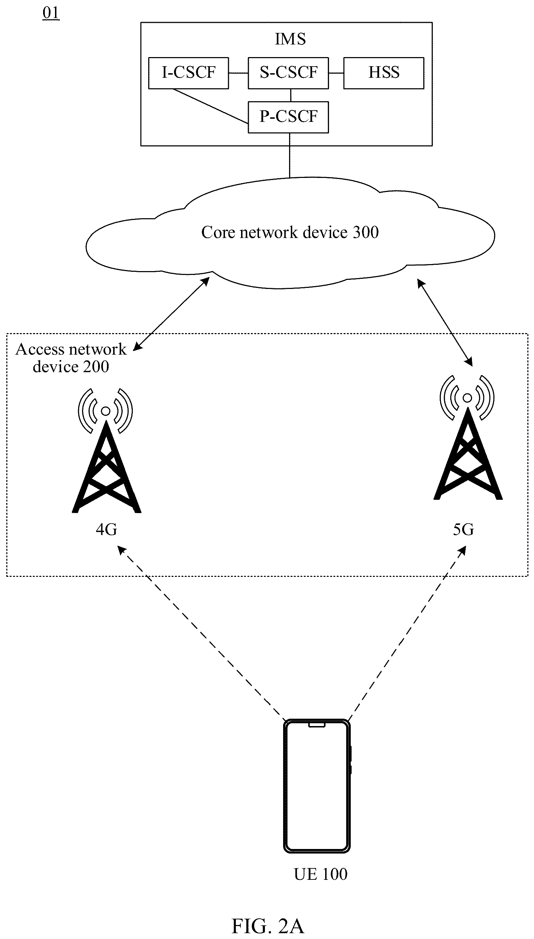

For example, FIG. 2A shows a schematic diagram of a system architecture to which a voice call method is applicable according to an embodiment of this application. The system architecture 01 may be a 4G communication system (LTE system) architecture, a 5G communication system (NR system) architecture, a new communication system architecture emerging in the future development of wireless communication, or the like.

In some embodiments, the system architecture 01 includes at least one UE 100, a plurality of access network devices 200 (for example, including 5G and/or 4G access network devices, which are collectively referred to as access network devices 200 herein) providing network access for the UE 100, and a core network device 300.

In some embodiments, the UE 100 may be a plurality of types of electronic devices, for example, a smart phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), a special voice call device, or the like. A specific type of the UE is not limited in this embodiment of this application.

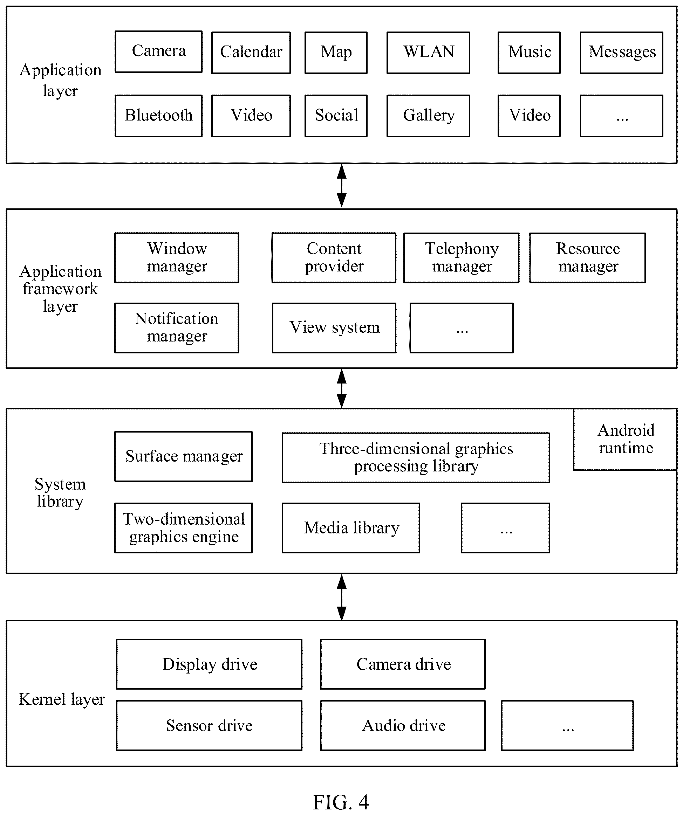

The UE 100 may include a plurality of functional components or functional modules, for example, a display screen (or referred to as a screen), a user interface (user interface, UI) module, and a modem. The modem may include a call management module, an IMS module, and a DS, RRC, and NAS module. The call management module may correspond to an mmode module. A DS submodule is mainly responsible for setup or activation of a bearer, and an IMS submodule is mainly responsible for a call procedure. Therefore, an IMS domain call cancellation message (for example, an instruction for inactivating a bearer) issued by the core network device is processed by the DS submodule. In addition, the DS submodule further notifies the IMS submodule that call initiation in an IMS domain fails (or the bearer is inactive). The DS submodule continues to perform a function of the DS submodule after completing the notification of the IMS submodule, for example, determines, according to cause information (for example, esm_cause=39) carried in the IMS domain call cancellation message, whether to re-set up an IMS bearer. The IMS submodule finds that the IMS bearer is inactive, resulting in call failure. Therefore, the call management module is informed of a system for redial (this application relates to IMS redial or CS redial). For a specific structure of the UE 100, refer to descriptions in FIG. 4 below. Details are not described herein again.

In some embodiments, in a 5G network, the access network device 200 may be a gNB. In a 4G network, the access network device 200 may be an eNB.

In some embodiments, the core network device 300 may alternatively be described as a network side device. Similar to the calling UE, the network side also has an IMS network. The IMS module (or an IMS device) may be used as a main body to perform a related procedure. The IMS module may be integrated into the core network device 300, or may be disposed separately outside the core network device 300. In this embodiment of this application, for ease of description, the core network and the IMS network are collectively referred to as a core network, and the IMS module and the core network device 300 are collectively referred to as a core network device 300. In other words, the core network device 300 according to this embodiment of this application may be considered as a device including the IMS module, and may have both a core network function and an IMS function.

In some embodiments, the IMS module may further specifically include an I-CSCF network element, an S-CSCF network element, a P-CSCF network element, and an HSS.

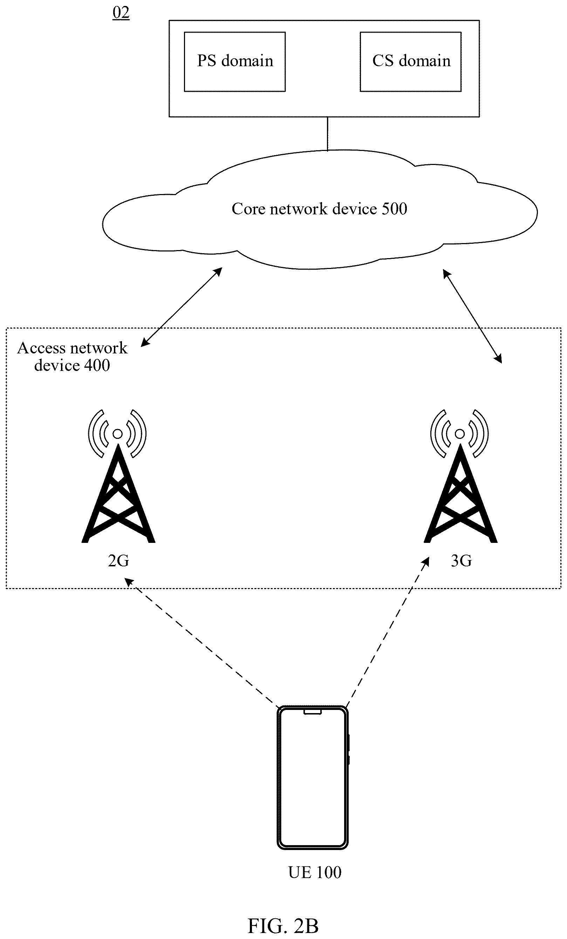

For example, FIG. 2B shows a schematic diagram of a system architecture to which another voice call method is applicable according to an embodiment of this application. The system architecture 02 may be a 2G communication system architecture, or may be a 3G communication system architecture.

In some embodiments, the system architecture 02 includes at least one UE 100, a plurality of access network devices 400 (for example, including 2G and/or 3G access network devices, which are collectively referred to as access network devices 400 herein) providing network access for the UE 100, and a core network device 500.

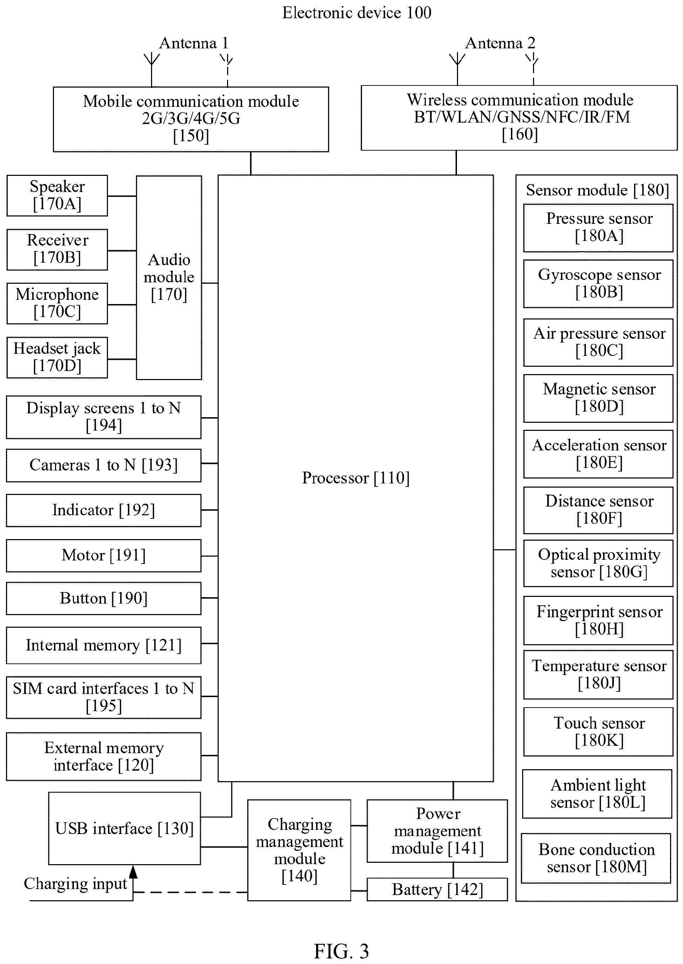

For the description of the UE 100, refer to specific descriptions of the structure in the embodiments of FIG. 3 and FIG. 4 below. Details are not described herein again.

In some embodiments, in a 2G or 3G network, the access network device may be a base station (NodeB) respectively corresponding to the 2G or 3G network. In this embodiment of this application, the access network device 200 and the access network device 400 may alternatively be described as access points (access point, AP).

In some embodiments, the core network device 500 may alternatively be described as a network side device. The core network may include a PS domain and a CS domain. When there is no network fault or abnormality, the core network device 500 may support communication between a calling UE and a called UE in the PS domain or the CS domain.

For example, FIG. 3 shows a schematic structural diagram of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present disclosure does not constitute a specific limitation on the electronic device 100. In some other embodiments of this application, the electronic device 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated to one or more processors.

The controller may be a nerve center and a command center of the electronic device 100. The controller may generate an operation control signal based on an instruction operation code and a sequence signal, and control obtaining and executing of instructions.

A memory may be further disposed in the processor 110, to store instructions and data. In some embodiments, the memory in the processor 110 is a cache. The memory may store instructions or data that has just been used or is cyclically used by the processor 110. If the processor 110 needs to use the instructions or the data again, the processor may directly invoke the instructions or the data from the memory. Repeated access is avoided, and waiting time of the processor 110 is reduced, thereby improving the system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like via different I2C bus interfaces. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 via the I2S bus to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may alternatively be configured to perform audio communication, and samples, quantizes, and encodes an analog signal. In some embodiments, the audio module 170 may be coupled to the wireless communication module 160 through the PCM bus interface. In some embodiments, the audio module 170 may alternatively transmit an audio signal to the wireless communication module 160 via the PCM interface to implement the function of answering a call via a Bluetooth headset. The I2S interface and the PCM interface both may be configured to perform audio communication.

The UART interface is a universal serial data bus for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 by using a DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to the USB standard specification, and may be specifically a Mini USB interface, a Micro USB interface, a USB Type C interface, or the like. The USB interface 130 may be configured to connect to the charger to charge the electronic device 100, or may be used for data transmission between the electronic device 100 and a peripheral device. The USB interface may alternatively be configured to connect to a headset to play audio through the headset. The interface may alternatively be configured to connect to another terminal such as an AR device.

It may be understood that an interface connection relationship between the modules that is shown in this embodiment of this application is merely an example for description, and does not constitute a limitation on the structure of the electronic device 100. In some other embodiments of this application, the electronic device 100 may use an interface connection manner different from that in the foregoing embodiments, or use combinations of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may supply power to the terminal by means of the power management module 141 while charging the battery 142.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like. The power management module 141 may be further configured to monitor parameters such as a battery capacity, a cycle count of a battery, and a battery health status (electric leakage and impedance). In some other embodiments, the power management module 141 may alternatively be disposed in the processor 110. In some additional embodiments, the power management module 141 and the charging management module 140 may alternatively be disposed in a same device.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may further be reused to improve antenna utilization. For example, the antenna 1 may be reused as a diversity antenna of the wireless local area network. In some additional embodiments, the antennas may be used in combination with a tuning switch.

The mobile communication module 150 may provide wireless communication solutions that include 2G, 3G, 4G, 5G, or the like and that are applied to the electronic device 100. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering and amplification on the received electromagnetic wave, and transmit the electromagnetic wave to the modem processor for demodulation. The mobile communication module 150 may further amplify a signal obtained after the modem processor performs demodulation, and convert the signal into an electromagnetic wave through the antenna 1, for radiation. In some embodiments, at least some of functional modules of the mobile communication module 150 may be disposed in the processor 110. In some embodiments, at least some of functional modules of the mobile communication module 150 may be disposed in a same device as at least some of modules of the processor 110.

The modem processor may include a modulator and a demodulator. The modulator is configured to modulate a to-be-transmitted low-frequency baseband signal to a medium-high-frequency signal. The demodulator is configured to demodulate the received electromagnetic wave signal to a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (which is not limited to the speaker 170A, the phone receiver 170B, and the like), or displays an image or a video through the display screen 194. In some embodiments, the modem processor may be an independent component. In some additional embodiments, the modem processor may be independent of the processor 110, and the modem processor and the mobile communication module 150 or another function module may be disposed in a same component.

The wireless communication module 160 may provide wireless local area network (wireless local area network, WLAN) (such as a wireless fidelity (wireless fidelity, Wi-Fi) network), Bluetooth (bluetooth, BT), global navigation satellite system (global navigation satellite system, GNSS), frequency modulation (frequency modulation, FM), near field communication (near field communication, NFC), infrared (infrared, IR), or other wireless communication solutions to be applied to the electronic device 100. The wireless communication module 160 may be one or more devices into which at least one communication processing module is integrated. The wireless communication module 160 receives an electromagnetic wave by using the antenna 2, performs frequency modulation on the electromagnetic wave signal and filters the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation via the antenna 2.

In some embodiments, the antenna 1 of the electronic device 100 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display screen 194, the application processor, and the like. The display screen 194 is configured to display an image, a video, or the like.

The electronic device 100 may implement a photographing function by using the ISP, the camera 193, the video codec, the GPU, the display 194, the application processor, and the like.

The digital signal processor is configured to process a digital signal, and may process another digital signal in addition to a digital image signal. For example, when the electronic device 100 selects a frequency point, the digital signal processor is configured to perform Fourier transform and the like on frequency point energy. The video codec is configured to compress or decompress a digital video. The NPU is a neural-network (neural-network, NN) computing processor. The NPU quickly processes input information with reference to a structure of a biological neural network, for example, a transfer mode between human brain neurons, and may further continuously perform self-learning.

The external memory interface 120 may be configured to connect to an external storage card, for example, a micro SD card, to expand a storage capability of the electronic device 100. The external storage card communicates with the processor 110 by using the external memory interface 120, to implement a data storage function. For example, files such as music and videos are stored in the external memory card. The internal memory 121 may be configured to store a computer-executable program code. The executable program code includes instructions.

The electronic device 100 may use the audio module 170, the speaker 170A, the telephone receiver 170B, the microphone 170C, the headset jack 170D, the application processor, and the like, to implement an audio function. For example, music playback or audio recording is implemented.

For example, a software system of the electronic device 100 may use a layered architecture, an event-driven architecture, a microkernel architecture, a microservice architecture, or a cloud architecture. In the embodiments of this application, an Android system with a layered architecture is used as an example to describe a software structure of the electronic device 100. FIG. 4 is a block diagram of a software structure of an electronic device 100 according to an embodiment of this application.

In the layered architecture, software is divided into several layers, and each layer has a clear role and task. The layers communicate with each other through a software interface. In some embodiments, an Android system is divided into four layers: an application layer, an application framework layer, Android runtime (Android runtime), a system library, a kernel layer, a hardware abstraction layer (hardware abstraction layer, HAL), and a hardware layer from top to bottom.

The application layer may include a series of application packages. As shown in FIG. 4, the application packages may include Camera, Calendar, Map, WLAN, Music, Messages, Gallery, Call, Navigation, Bluetooth, Video, and other applications.

The application framework layer provides an application programming interface (application programming interface, API) and a programming framework for the application at the application layer. The application framework layer includes some predefined functions. As shown in FIG. 4, the application framework layer may include a window manager, a content provider, a telephony manager, a resource manager, a notification manager, a view system, and the like.

The window manager is configured to manage a window application. The window manager may obtain a size of a display screen, determine whether there is a status bar, perform screen locking, take a screenshot of the screen, and the like.

The content provider is configured to store and obtain data, and enable the data to be accessible to an application. The data may include video, an image, audio, calls that are made and answered, a browsing history and a bookmark, a phonebook, and the like.

The view system includes visual controls such as a text display control and a picture display control. The view system may be configured to create an application. The display interface may include one or more views. For example, a display interface including a short message notification icon may include a view for displaying text and a view for displaying a picture.

The phone manager is configured to provide a communication function of the electronic device 100, for example, call state (including a put-through state, a hang-up state, etc.) management.

The resource manager provides various resources for an application, such as a localized string, an icon, a picture, a layout file, and a video file.

The notification manager enables an application to display notification information in a status bar, may be configured to convey a notification-type message, and may automatically disappear after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted on a status bar, a prompt tone is made, a terminal vibrates, or an indicator light flashes.

The Android Runtime includes a kernel library and a virtual machine. The Android Runtime is responsible for scheduling and managing the android system.

The kernel library includes two parts: a performance function that needs to be invoked by a java language and a core library of Android.

The application layer and the application framework layer are run in the virtual machine. The virtual machine executes java files at the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playing and recording of a plurality of commonly used audio and video formats, static image files, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering, synthesis, layer processing, and the like.

The 2D graphics engine is a drawing engine for 2D drawings.

The core layer is a layer between hardware and software. The kernel layer includes at least a display drive, a camera sensor drive, an audio drive, and a sensor drive.

In order to better understand a voice call method provided in an embodiment of this application, a user-visual process that may be involved in the method is described below with reference to the accompanying drawings.

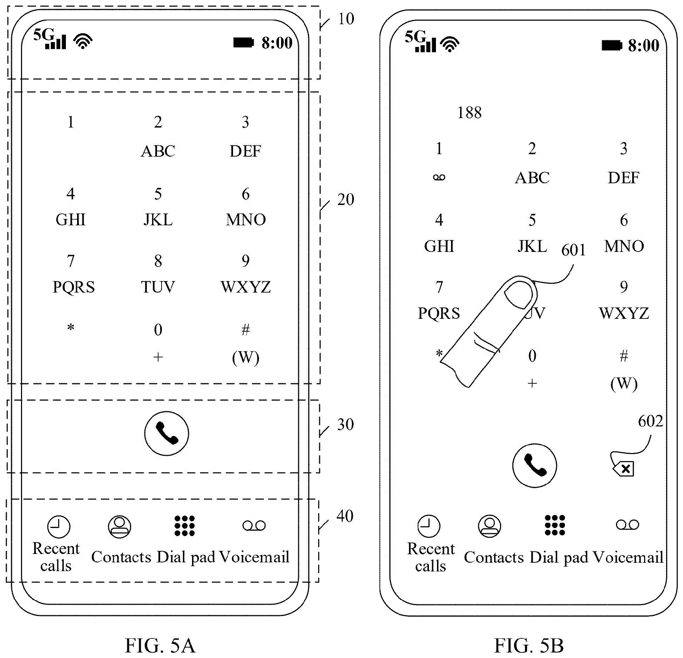

For example, FIG. 5A to FIG. 5D show schematic diagrams of some graphical user interfaces (graphical user interface, GUI) which may be involved in an implementation process of a voice call method according to an embodiment of this application. For ease of description, an example in which a UE is a mobile phone is used for description herein, but in an actual application, the type of the UE is not limited thereto.

FIG. 5A shows a schematic diagram of a dial interface of a mobile phone. For example, a status bar 10 may be displayed above the dial interface. The status bar 10 may include: one or more signal strength indicators of a mobile communication signal (or a cellular signal), one or more signal strength indicators of a Wi-Fi signal, an electric quantity indicator of a mobile phone, a time indicator, and the like. Below the status bar 10, the dial interface may further display a dial pad 20. The dial pad 20 may include: Arabic numerals of 0 to 9. For example, three or four capitalized English letters are respectively displayed below each of the numerals 2 to 9. In addition, the dial pad 20 may further include an asterisk key (*), a pound key (#), a plus key (+) located below 0, (W) located below the pound key, and the like. Below the dial pad 20, the dial interface may further display a call initiation control 30. The call initiation control 30 is configured to initiate, in response to an operation of a user, a voice call to a mobile phone corresponding to a phone number that has been entered by the user. Indicators for switching other interfaces may further be included below the call initiation control 30, including a recent calls indicator, a contacts indicator, a dial pad indicator (corresponding to a current dial interface), a voicemail indicator, and the like.

It should be noted that the dial interface shown in FIG. 5A is merely an example. In an actual application, the dial interface involved in the voice call method provided in this embodiment of this application may further include more or fewer other controls, or content of the dial interface has other types of layouts. This is not limited in this embodiment of this application.

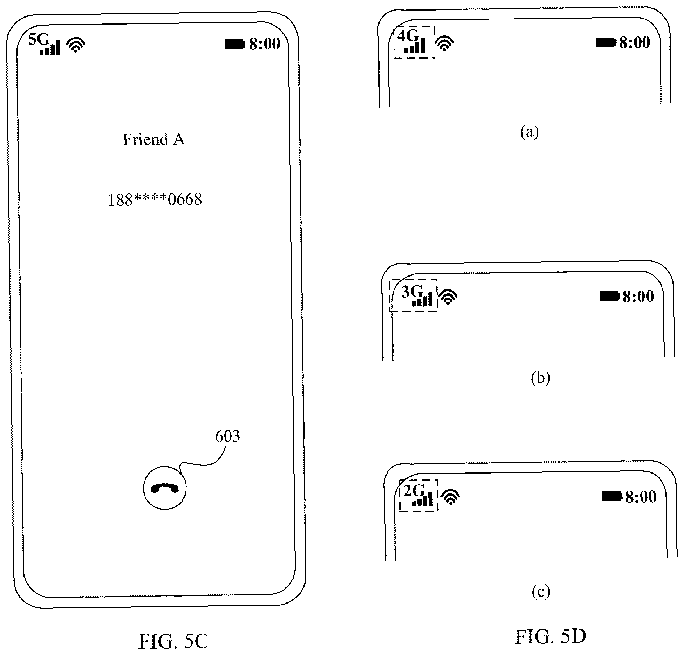

In a possible scenario, as shown in FIG. 5B, when needing to perform a voice call with a friend A, a user may enter a dial operation 601 on a dial pad shown in a dial interface. The dial operation 601 may be clicking/tapping a phone number corresponding to the friend A. When a mobile phone receives the dial operation 601 entered by the user, in response to the operation, numerals (188 shown in FIG. 5A) dialed by the user may be displayed above the dial pad 20, and a numeral deletion control 602 may be further displayed below the dial pad. After detecting that the user enters a complete phone number (for example, 188****0668) and detecting that the user enters a preset operation for the call initiation control 30 (for example, clicking the call initiation control 30), the mobile phone may initiate a voice call to a mobile phone (referred to as a called mobile phone or a called UE below) corresponding to the phone number. In this case, a mobile phone interface may jump to a voice call interface shown in FIG. 5C.

For example, as shown in FIG. 5C, in addition to displaying a status bar the same as (or similar to) that shown in FIG. 5A, the voice call interface may further display a name of a friend A, a phone number corresponding to the friend A, and a voice hang-up control 603 located below the phone number.

In some embodiments, a user may initiate a voice call to the friend A by using a 5G NR system. In this case, in a status bar on the top of the voice call interface, a cellular network corresponding to a call initiating number is displayed as 5G (as shown in FIG. 5C). However, in a voice call process, if a 5G network does not support a VoNR service, or a current 5G network does not have a condition for performing VoNR, the voice call may fall back to a 4G network, or even to a 3G network or a 2G network. In this case, as shown in FIG. 5D, the cellular network on the top of the voice call interface may be displayed as 4G (as shown in (a) in FIG. 5D), 3G (as shown in (b) in FIG. 5D), or 2G (as shown in (c) in FIG. 5D). If falling back to the 3G network or the 2G network, an IMS domain is switched to a CS domain for voice redial.

It should be noted that in this embodiment of this application, after call initiation fails in the IMS domain, a calling mobile phone is not directly switched from the IMS domain to the CS domain for redial, but continues to redial in the IMS domain according to a cause for failure of call initiation in the IMS domain. If the redial in the IMS domain still fails after a trigger condition is satisfied, the CS domain is switched to for redial.

According to the voice call method provided in this embodiment of this application, by continuing trying, after call initiation fails in an IMS domain, to redial in the IMS domain until the redial in the IMS domain is successful, or switching to a CS domain for redial if the redial in the IMS domain still fails after a trigger condition is satisfied, a probability that a voice call is successfully set up in the IMS domain can be improved, and a voice call service that can be clearly performed in an IMS can be prevented from being switched to the CS domain with poor call quality, thereby improving voice call quality of a user.

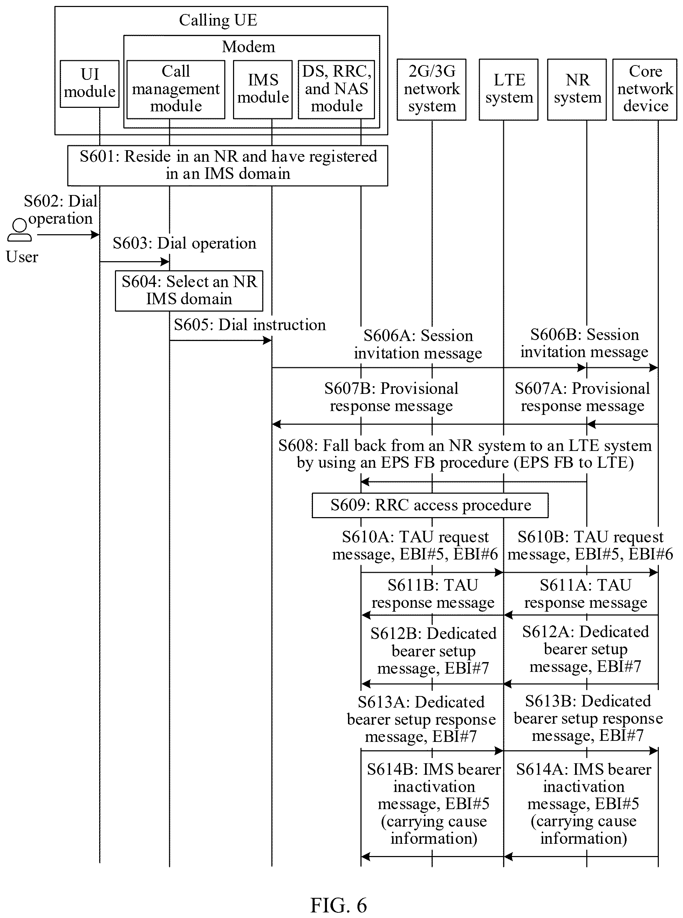

Hereinafter, with reference to the accompanying drawings, underlying interaction logic involved in an implementation process of the voice call method provided in this embodiment of this application will be described. First, with reference to FIG. 6, a process in which a calling UE requests to set up a voice call in an IMS domain in a voice call method according to an embodiment of this application is described.

For example, FIG. 6 shows a schematic flowchart of a voice call method according to an embodiment of this application. The procedure may be executed by a calling UE (such as a mobile phone), a network system, a core network device, and the like, and may specifically include the following steps:
S601: A calling UE resides in an NR system and has registered in an NR IMS domain.

The calling UE may be a device initiating a voice call, for example, corresponding to the mobile phone shown in FIG. 5A to FIG. 5D.

In some embodiments, before residing in the NR system, the calling UE first needs to access the NR system. For example, a process in which the calling UE accesses the NR system may include, for example: The calling UE initiates a competitive random access. A gNB replies Msg2 (i.e. a random access response (random access response, RAR)) to the calling UE. The calling UE initiates an RRC setup request (setup request) message to the gNB, and carries initial identity (initial identity) information and setup cause (establishment cause) information, to request to set up an RRC connection. The message corresponds to Msg3 in a random access process. The gNB allocates and sets up an SRB1 bearer (used for carrying all RRC signaling and some network attached storage (network attached storage, NAS) signaling) to the calling UE, and sends an RRC setup (RRC setup) message to the calling UE. The UE sends an RRC setup complete (RRC setup complete) message to the gNB, and the RRC connection is successfully set up.

In some embodiments, before the calling UE resides in the NR system, the calling UE may first register in an IMS domain. For example, specific steps of a registration procedure of the calling UE in the IMS domain may include: (1) The UE obtains a P-CSCF address from a message when an IMS default bearer is created. The UE sends a register message to a P-CSCF by using the IMS default bearer. (2) The P-CSCF forwards the register message to an I-CSCF. (3) The I-CSCF sends a User Authorization request message to an HSS, to obtain an S-CSCF. (4) The HSS answers the User Authorization request message, including an S-CSCF capability set. (5) The I-CSCF forwards the register message to the S-CSCF. (6) The S-CSCF sends a multimedia authentication request message to the HSS to query an authentication parameter group. (7) The HSS issues the authentication parameter group by using a multimedia authentication answer message. (8) The S-CSCF sends a 401 response message to the I-CSCF, including an authentication parameter, to perform bidirectional authentication on a terminal. (9) The I-CSCF sends the 401 response message to the P-CSCF. (10) The P-CSCF sends the 401 response message to the UE. The P-CSCF takes out AK and CK, and forwards AUTN and RAND to the UE. (11) The UE performs calculation according to the authentication parameter, and resends a register message after the authentication on the network side is successful, where the message includes a calculated XRES. (12) The P-CSCF forwards the register message to the I-CSCF. (13) The I-CSCF sends a User Authorizationrequest to the HSS again. (14) The HSS returns a name of the S-CSCF by using a User Authorizationanswer message. (15) The I-CSCF forwards the register message to the S-CSCF. If the S-CSCF checks that the XRES is the same as that returned by the HSS, the authentication is successful. The IMS domain supports AKA authentication that is the same as that of 3G. (16) The S-CSCF sends a Service assignmentrequest message to the HSS to obtain user subscription data. (17) The S-CSCF sends a 200 OK response message to the I-CSCF, and the I-CSCF forwards 200 OK to the P-CSCF and then to the UE. The UE successfully registers in the IMS domain. (18) For a VoLTE user, the S-CSCF further sends a register message to a corresponding AS according to the user subscription data. 200 OK is returned after the AS successfully registers.

In some embodiments, when the calling UE resides in the NR system, an interface of the calling UE may display a 5G cellular signal indicator, for example, corresponding to a 5G signal indicator in the status bar shown in FIG. 5A.

It should be noted that this embodiment of this application is described by using only an example in which the calling UE resides in the NR system before call initiation and has registered in the NR IMS domain. In an actual application, a scenario before call initiation is not limited to this. For example, before call initiation, the calling UE may reside in an LTE system, and has registered in an LTE IMS domain. Alternatively, the calling UE resides in the NR system or the LTE system, but has not registered in the IMS domain. However, situations involved in failure of call initiation in the IMS domain may be applied to the voice call method provided in this embodiment of this application. An application scenario of this method is not specifically limited in this embodiment of this application.

S602: The calling UE receives a dial operation entered by a user.

In some embodiments, a screen of the calling UE may receive the dial operation of the user. Then, the screen transmits the dial operation to a UI module. For example, the dial operation may include: a number of a called UE entered by the user, and a click/tap operation performed by the user on a call control. Alternatively, the dial operation may include: an operation of instructing, by the user, a calling UE assistant (for example, a mobile phone assistant) to dial through voice input, and the like. A specific manner in which the user enters the number of the called UE is not limited in this application.

In some embodiments, the screen may transmit the dial operation to the UI module of the calling UE.

Optionally, the user may enter the number of the called UE in multiple manners, for example: (1) The user may manually click/tap numerals in a dial pad according to the number of the called UE, for example, corresponding to the operation described in the embodiment of FIG. 5B. (2) Alternatively, the user may enter the number of the called UE by using a voice. For example, the user wakes up the mobile phone assistant, and then instructs the mobile phone assistant to enter the number of the called UE by using a voice. A specific manner in which the user enters the number of the called UE is not limited in this application.

S603: A UI module of the calling UE sends a dial operation to a call management module in a modem of the calling UE.

S604: The call management module of the calling UE selects the NR IMS domain.

For a specific process of domain selection of the NR IMS domain, refer to the existing procedure. Details are not described in this embodiment of this application.

S605: The call management module sends a dial instruction to an IMS module.

The dial instruction may include information such as a phone number of the called UE and a network system for call initiation.

S606A: The IMS module sends a session invitation message (invite) to the NR system in response to the dial instruction.

The session invitation message may be used for requesting to set up a voice call service with the called UE (in the IMS domain).

S606B: The NR system sends the session invitation message (invite) to a core network device.

In some embodiments, the NR system may forward the session invitation message (invite) to the core network device in a transparent transmission manner.

S607A: The core network device sends a provisional response message to the NR system.

In some embodiments, the provisional response message may correspond to 100 trying signaling, for indicating that the called UE has received the session invitation message (invite) sent by the calling UE.

S607B: The NR system sends a provisional response message to the calling UE.

In some embodiments, the NR system may forward the provisional response message to the calling UE in a transparent transmission manner. Specifically, the NR system may transparently transmit the provisional response message to the IMS module of the calling UE.

In some embodiments, after obtaining the provisional response message, the calling UE may learn that the called UE has received the session invitation message (invite).

In some scenarios, if a 5G network does not support a VoNR service or a current 5G network does not have a condition for performing VoNR, the NR system may instruct the calling UE to switch from the 5G network to a 4G network to set up a voice call in the IMS domain. In this case, the following step S608 needs to be performed:

S608: The NR system instructs a DS, RRC, and NAS module in the modem of the calling UE to fall back from the NR system to the LTE system by using an EPS FB procedure (EPS FB to LTE).

In some embodiments, the NR system may specifically instruct an RRC submodule in the DS, RRC, and NAS module to fall back from the NR system to the LTE system by using the EPS FB procedure.

In some embodiments, the 5G network defines two voice access modes: VoNR and evolved packet system fallback (evolved packet system fallback, EPS fallback). Therefore, if the NR does not support or does not have a VoNR voice call service, or the NR has a fault, the network side instructs the calling UE to use a voice solution of the EPS fallback. To be specific, the calling UE is instructed to fall back to the LTE for a VoLTE voice call service, thereby implementing voice continuity.

It should be noted that in this embodiment of this application, the DS, RRC, and NAS module of the calling UE may be a module in which a DS submodule, the RRC submodule, and an NAS submodule are integrated. In this module, the DS submodule, the RRC submodule, and the NAS submodule may perform respective original functions.

It should be additionally noted that this embodiment of this application is described by using an example in which the calling UE does not support the VoNR voice call service. However, in an actual application, if supporting the VoNR voice call service, the calling UE may directly perform the VoNR voice call service on the NR without falling back to the LTE for the VoLTE voice call service. Alternatively, in an actual application, if the calling UE resides in the LTE system and has registered in the LTE IMS domain, the step does not need to be performed, and the VoLTE voice call service is directly performed on the LTE. To be specific, in this embodiment of this application, that the calling UE falls back to the LTE system and performs the voice call service in the LTE IMS domain is merely an example in a possible scenario, and is not limited thereto in an actual application.

When the calling UE needs to fall back to the LET for a VoLTE service, the calling UE needs to access the LTE system. For a specific process, refer to step S609:
S609: The DS, RRC, and NAS module of the calling UE initiates an RRC access procedure.

The RRC access procedure in this step may be specifically initiated by the RRC submodule.

In some embodiments, the process in which the calling UE accesses the LTE system by initiating an RRC access procedure may include, for example: When the calling UE is powered on, but does not set up an RRC connection to the LTE system, an eNode issues related configuration information by using a system broadcast message. Accordingly, the calling UE performs cell search, obtains time and frequency synchronization with a cell, obtains a physical cell identity, and obtains cell quality and other information of the cell according to the physical cell identity. Finally, the calling UE may select an appropriate cell to reside.

It should be noted that the calling UE not only needs to perform cell search during power-on, but also to support mobility (mobility), the calling UE continuously searches a neighboring cell, obtains synchronization, and estimates reception quality of the cell signal, to determine whether to perform handover or cell reselection. For a detailed process in which the calling UE accesses the LTE system, refer to an existing standard procedure or another improvement procedure. Details are not described in this embodiment of this application.

S610A: The calling UE sends a TAU request message to an LTE system, where the TAU request message is used for initiating a TAU procedure, and the TAU request message carries EBI#5 and EBI#6.

In some embodiments, the TAU procedure in this step may be initiated by the NAS submodule.

A specific implementation process of the TAU procedure may include: The NAS submodule sends a TAU request message to the LTE system, where the TAU request message may include BEI#5 and EBI#6, and the TAU request message may be used for requesting to synchronize a state of an IMS default bearer and a state of a data service bearer with a network (for example, a core network device side). After receiving the TAU request message, the LTE system forwards the TAU request message to the core network device. In response to the TAU request message, the core network device may send a TAU response message to the LTE system, where the TAU response message may indicate states of an IMS default bearer and a data service bearer that are stored (or recorded) by the core network device. After receiving the TAU response message, the LTE system forwards the TAU response message to the NAS submodule.

It should be noted that the TAU procedure is used for aligning the calling UE and the network (for example, the core network device side) with a bearer state. The TAU request message may carry a state of the calling UE side (a state of an IMS default bearer and a state of a data service bearer). When the TAU receives the request (or TAU access), the process is equivalent to also carrying the state of the IMS default bearer and the state of the data service bearer on the network side.

It should be additionally noted that the calling UE informs a 4G core network (evolved packet core, EPC) of a tracking area (tracking area, TA) thereof by tracking area registration. The TA is a concept set by the LTE system for position management of the UE. Generally, one TA is identified by using a TA identity (tracing area identity, TAI), and the TAI may include a mobile country code (mobile country code, MCC), a mobile network code (mobile network code, MNC), and a tracking area code (tracking area code, TAC). In this embodiment, the calling UE performs cell reselection from the NR system to the LTE system. Therefore, the calling UE needs to send a TAU request message to a core network of the LTE system to initiate a TAU procedure, to update the tracking area. The calling UE may inform the EPC of a TA thereof by tracking area update, and the EPC can send a paging message to an eNodeB of the TA of the calling UE according to the TA of the calling UE.

It should be noted that when the calling UE initiates a TAU procedure, the TAU request message carries EBI#5 (EBI#5 corresponds to QCI=5), indicating that the calling UE supports and needs to set up an IMS default bearer. In addition, the TAU request message may further carry EBI#6 (EBI#6 corresponds to QCI=9), indicating that the calling UE supports and needs to set up a data service bearer.

S610B: The LTE system sends a TAU request message to the core network device, where the TAU request message is used for initiating a TAU procedure, and the TAU request message carries EBI#5 and EBI#6.

The LTE system may send the TAU request message to the core network device of the 4G network in a transparent transmission manner.

In some embodiments, the TAU request message may include BEI#5 and EBI#6, and the TAU request message may be used for requesting to synchronize a state of an IMS default bearer and a state of a data service bearer with a network (for example, a core network device side).

S611A: The core network device sends a TAU response message to the LTE system.

In some embodiments, the TAU response message may indicate states of an IMS default bearer and a data service bearer that are stored (or recorded) by the core network device.

S611B: The LTE system sends a TAU response message to the calling UE.

In some embodiments, the LTE system sends a TAU response message to the NAS submodule in the calling UE.

S612A: The core network device sends a dedicated bearer setup message to the LTE system, where the dedicated bearer setup message carries EBI#7.

EBI#7 (corresponding to QCI=1) indicates setup of a dedicated bearer for an IMS voice call service.

Specifically, a dedicated bearer setup procedure in this step may be executed by the core network device and the DS submodule in the calling UE.

A specific implementation process of the dedicated bearer setup procedure may include: The core network device sends a dedicated bearer setup message to the LTE system, where the dedicated bearer setup message may include EBI#7. After receiving the dedicated bearer setup message, the LTE system forwards the dedicated bearer setup message to the NAS submodule and the DS submodule of the calling UE. In response to the dedicated bearer setup message, the DNS submodule and the DS submodule of the calling UE may send a dedicated bearer setup response message to the LTE system, where the dedicated bearer setup response message may include related parameters for setting up a dedicated bearer. After receiving the dedicated bearer setup response message, the LTE system forwards the dedicated bearer setup response message to the core network device.

S612B: The LTE system sends a dedicated bearer setup message to the calling UE, where the dedicated bearer setup message carries EBI#7.

In some embodiments, the LTE system may send the dedicated bearer setup message to the DS submodule in the calling UE in a transparent transmission manner.

S613A: The calling UE sends a dedicated bearer setup response message to the LTE system, where the dedicated bearer response message carries EBI#7.

In some embodiments, in response to the dedicated bearer setup message in step S612B, the DS submodule of the calling UE may send a dedicated bearer setup response message to the LTE system, where the dedicated bearer setup response message may include related parameters for setting up a dedicated bearer, and the like.

S613B: The LTE system sends a dedicated bearer setup response message to the core network device.

In some cases, after the calling UE successfully completes setup of a dedicated bearer QCI=1 of an IMS domain voice call service in the LTE TAU procedure, the core network side cannot continue to perform the voice call service in the IMS domain due to a temporary network fault, and may issue an IMS domain call cancellation message. The IMS domain call cancellation message may include, for example, an IMS bearer inactivation message for inactivating an IMS default bearer, or may include a service unavailable message (503 service unavailable) 503. For ease of understanding, descriptions are provided below by using an example in which the core network device sends the IMS bearer inactivation message. However, it should be understood that this embodiment of this application is not limited thereto.

S614A: The core network device sends an IMS bearer inactivation message to the LTE system, where the IMS bearer inactivation message carries EBI#5 and cause information.

It should be noted that after the core network side obtains EBI#5 and EBI#7, two situations may occur: The former means that if the core network side does not have a fault, a voice call service (VoLTE) of the calling UE in the IMS domain is also supported, and then the calling UE may subsequently directly set up a VoLTE voice call with the called UE in the IMS domain. The latter means that if the core network side (temporarily) fails, to be specific, the calling UE does not support a voice call service (VoLTE) in the IMS domain currently, the calling UE may subsequently try to re-register in the IMS domain based on cause information for IMS bearer inactivation. If the registration is successful, the calling UE performs the VoLTE voice call service in the IMS domain again. A CS domain is switched to for a voice call service if the registration fails. Alternatively, the calling UE may subsequently directly switch to the CS domain to perform the voice call service based on the cause information for IMS bearer inactivation.

For the former, the calling UE may directly complete the VoLTE voice call service in the IMS domain. This situation is not described excessively in this embodiment of this application. The voice call method provided in this embodiment of this application is mainly applied to the latter, namely a scenario in which the core network side (temporarily) fails, an IMS default bearer is inactive, and the core network side does not currently support a voice call service in the IMS domain.

It should be noted that an EBI of 5 carried in an IMS bearer inactivation message indicates that the IMS default bearer recorded by the core network device and corresponding to the UE is abnormal. Further, it is also noted that the calling UE cannot set up the voice call service in the IMS domain.

In some embodiments, the IMS bearer inactivation message may be used as an example of an IMS domain call cancellation message sent by the core network device. The IMS domain call cancellation message is used for indicating call cancellation of the calling UE in the IMS domain. Optionally, the core network device may alternatively send, to the LTE system, other messages for indicating failure of call initiation of the calling UE in the IMS, such as a service unavailable message (for example, 503 service unavailable). For ease of understanding, descriptions are provided below by using an example in which the core network device sends the IMS bearer inactivation message. However, it should be understood that this embodiment of this application is not limited thereto.

In some embodiments, the cause information is used for indicating whether an IMS service may be restored within a first duration. For example, when the cause information is esm_cause=39, an IMS service may be restored within the first duration, and needs to be reactivated. When the cause information is esm_cause=38, the IMS service cannot be restored within the first duration. The IMS service may refer to setting up, by the core network, an IMS domain default bearer corresponding to the calling UE. The IMS domain default bearer may be used by the calling UE to set up the voice call service in the IMS domain.

In some embodiments, the first duration may be flexibly set according to a requirement, for example, set to 3 s or 5 s. This is not limited in this embodiment of this application.

In some embodiments, the LTE system may specifically send the IMS bearer inactivation message to the DS submodule. It should be noted that when the core network device sends another IMS domain call cancellation message, the LTE system may alternatively directly send the IMS domain call cancellation message to the IMS module of the calling UE.

It should be noted that the IMS bearer inactivation message may be used as an example of an IMS domain call cancellation message sent by the core network device. The IMS domain call cancellation message is used for indicating call cancellation of the calling UE in the IMS domain. Optionally, the core network device may alternatively send, to the LTE system, other messages for indicating failure of call initiation of the calling UE in the IMS, such as a service unavailable message (for example, 503 service unavailable). For ease of understanding, descriptions are provided below by using an example in which the core network device sends the IMS bearer inactivation message. However, it should be understood that this embodiment of this application is not limited thereto.

S614B: The LTE system sends an IMS bearer inactivation message to the calling UE, where the IMS bearer inactivation message carries EBI#5 and cause information.

In some embodiments, the LTE system may specifically send the IMS bearer inactivation message to the DS submodule. The LTE system may send the IMS bearer inactivation message to the calling UE in a transparent transmission manner.

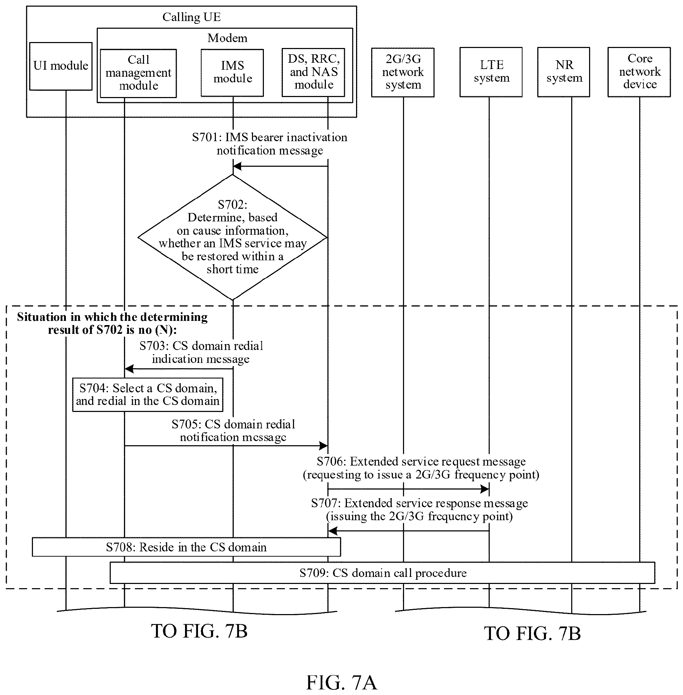

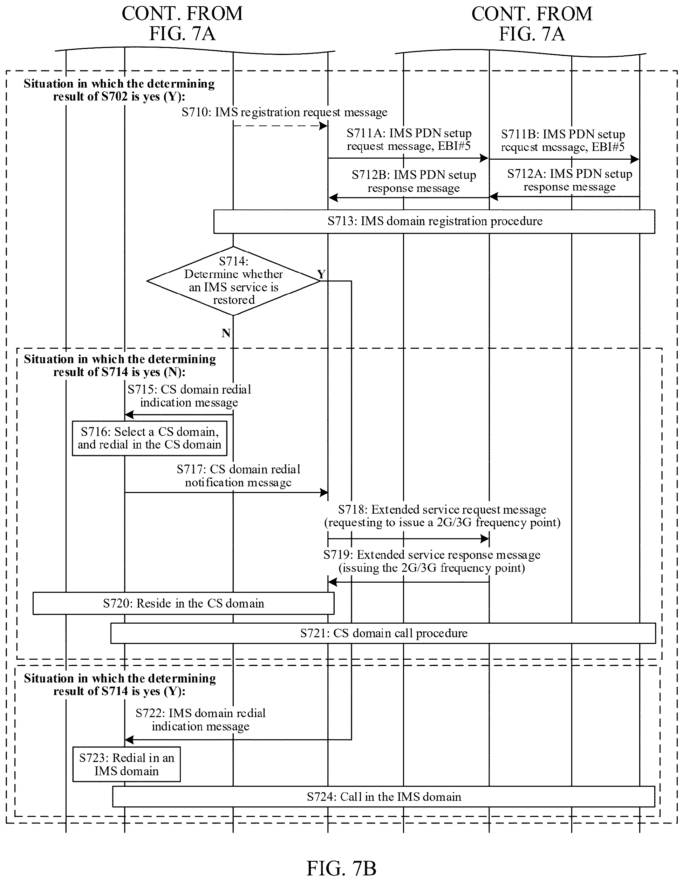

It should be noted that, after the core network device returns, to the caller, the IMS bearer inactivation message carrying the cause information, in the voice call method provided in this embodiment of this application, the calling UE side may redial in the IMS domain in different manners according to the cause information, to try to re-set up a voice call service in the IMS domain. For example, the following describes, with reference to FIG. 7A and FIG. 7B to FIG. 10, several solutions in which a calling UE re-sets up a voice call service in an IMS domain in a scenario that the calling UE resides in NR and has registered in the IMS domain, but subsequently, an IMS default bearer thereof is inactivated.

For example, according to a type of a trigger condition for switching from the IMS domain to a CS domain, the method provided in this embodiment of this application may specifically include the following solutions:
Solution 1: The trigger condition is: redialing in the IMS domain, and switching to the CS domain for redial if the redial fails; and performing a voice call service in the IMS domain if the redial is successful.

For example, FIG. 7A and FIG. 7B show a schematic flowchart of a voice call method according to an embodiment of this application. The procedure may be performed after the foregoing step S614B. The procedure may be executed by a calling UE (such as a mobile phone), a network system, a core network device, and the like, and may specifically include the following steps:

S701: A DS, RRC, and NAS module of a calling UE sends an IMS bearer inactivation notification message to an IMS module of the calling UE.

The IMS bearer inactivation notification message is used for indicating that an IMS default bearer is inactivated.

S702: The IMS module of the calling UE determines, based on cause information for IMS bearer inactivation, whether an IMS service may be restored within a first duration.

In some embodiments, the calling UE may determine, based on the cause information, whether to re-register in an IMS domain, or determine whether to re-set up an IMS bearer. Specifically, when the IMS service may be restored within the first duration (for example, the cause information is esm_cause=39), the calling UE may determine, based on the cause information, to reactivate the IMS bearer and re-register the IMS bearer in the IMS domain. When the IMS service cannot be restored within the first duration (for example, the cause information is esm_cause=38), the calling UE may determine, based on the cause information, that the calling UE no longer re-registers in the IMS domain, and no longer activates the IMS bearer. In this case, a CS domain may be switched to for redial.

It should be noted that the cause information esm_cause=39 listed herein corresponds to that the IMS service can be restored within the first duration, and esm_cause=38 corresponds to that the IMS service cannot be restored within the first duration. This is merely used as an example. In an actual application, an identifier for indicating whether the IMS service can be restored in the first duration may further include other content. This is not limited in this embodiment of this application.

For example, there may be a plurality of manners in which the calling UE determines, based on the cause information, whether the IMS service may be restored within the first duration. For example, the manners include: (1) The calling UE may obtain, based on obtained prior experience (for example, obtained big data or obtained historical data), cause values corresponding to that the IMS service may be quickly restored, and cause values corresponding to that the IMS service cannot be quickly restored. This manner is equivalent to that the calling UE has been set with a rule in advance. After receiving the cause values, the calling UE may calculate, based on the built-in rule, whether an IMS bearer needs to be re-set up. (2) The calling UE may negotiate with a core network device to determine cause values corresponding to that the IMS service of the network side may be quickly restored, and cause values corresponding to that the IMS service cannot be quickly restored. Then, the calling UE may store a negotiation result locally, may receive cause information, and may query, based on the locally stored negotiation result, which IMS service restoration result corresponds to a cause value in the cause information. (3) The calling UE may obtain, by the network side in advance or by a third party outside the network side in advance, a correspondence between the cause value and the IMS service restoration result, and store the correspondence locally.

Using the foregoing manner (2) as an example, refer to the following Table 1 for a possible example of the negotiation result.

**Table 1**

| Inactivation cause information | Restoration result of IMS service |
|---|---|
| esm_cause=39 | Restored within a first duration (for example, within 3 s or 5 s). |
| esm_cause=38 | Not restored within a first duration (for example, within 3 s or 5 s). |

Optionally, the cause information for IMS bearer inactivation may further indicate more detailed information about whether the IMS service may be restored. For example, referring to the following Table 2, when the inactivation cause information is: esm_cause=A, the IMS service may be restored, but a restoration time is unknown. When the inactivation cause information is: esm_cause=B (B may be 39), the IMS service may be restored within the first duration (for example, within 3 s or 5 s). When the inactivation cause information is: esm_cause=C (C may be, for example, 38), the IMS service cannot be restored within the first duration (for example, within 3 s or 5 s).

**Table 2**

| Inactivation cause information | Restoration result of IMS service |
|---|---|
| esm_cause=A | Restored, but unknown restoration time |
| esm_cause=B | Restored within a first duration (for example, within 3 s or 5 s). |
| esm_cause=C | Not restored within a first duration (for example, within 3 s or 5 s). |

It should be noted that an inactivation cause provided in this embodiment of this application is only described by using A to C as examples. In an actual application, a correspondence between the inactivation cause and the IMS service restoration result may be further set up by using other identifiers (for example, values 39 and 38).

With reference to Table 1 and Table 2 above, a manner in which the calling UE may determine, based on the cause information, whether to re-register in an IMS domain, or determine whether to re-set up an IMS bearer is illustrated:

First, for the situation in Table 1, a manner in which the calling UE may determine, based on the cause information returned by the core network side, whether the IMS service may be restored within the first duration may include: If the cause information obtained by the calling UE is esm_cause=39, it is determined that the IMS service may be restored within the first duration (for example, within 3 s or 5 s), re-registration may be subsequently performed on the IMS domain, a default bearer of the IMS domain is set up, and a voice call service is performed in the IMS domain. If the cause information obtained by the calling UE is esm_cause=38, it is determined that the IMS service cannot be restored within the first duration. Subsequently, re-registration is not performed in the IMS domain. Instead, the CS domain is switched to for redial, to perform a voice call service in the CS domain.

For the situation in Table 2, it should be noted that, when the inactivation cause information is: esm_cause=A, the IMS service may be restored, but a restoration time may be relatively short (for example, restored within 5 s), or may be relatively long (for example, restored at 5 s or over 5 s). Therefore, esm_cause=A may be set to correspond to different restoration results according to requirements. Specifically, esm_cause=A may be set to correspond to that the IMS service can be restored within the first duration, or esm_cause=A may be set to correspond to that the IMS service cannot be restored within the first duration. Therefore, in some embodiments, for the situation in Table 2, there may be a plurality of manners in which the calling UE determines, based on the cause information, whether the IMS service may be restored:

For example, in the manner 1 (referring to Table 3), when the inactivation cause information is esm_cause=A, it is considered that the IMS service can be restored within the first duration, so that the calling UE subsequently (for example, waits for a period of time, or waits for a timing duration, or periodically) tries to re-register in the IMS domain and tries to re-set up VoLTE. When the cause information is esm_cause=B (B is, for example, 39), it is also considered that the IMS service may be restored within the first duration, so that the calling UE subsequently (for example, waits for a period of time, or waits for a timing duration, or periodically) tries to re-register in the IMS domain and tries to re-set up VoLTE. To be specific, in this manner, when the cause information is A and/or B, it is considered that the IMS service is restored within the first duration (to be specific, a determining result is Y). When the cause information is esm_cause=C (C is, for example, 38), it is considered that the IMS service cannot be restored within the first duration, and further, the calling UE does not try to perform IMS registration. In this case, the determining result indicating whether the IMS service is restored within the first duration is N.

**Table 3**

| Inactivation cause information | Determining result of whether an IMS service may be restored within a first duration | Whether a calling UE re-registers in an IMS domain |
|---|---|---|
| esm_cause=A | Y | Y |
| esm_cause=B | Y | Y |
| esm_cause=C | N | N |

For another example, in the manner 2 (referring to Table 4), when the cause information is esm_cause=A or when the inactivation cause information is esm_cause=C (C is, for example, 38), it is considered that the IMS service cannot be restored within the first duration, and further, the calling UE does not try to re-register in the IMS domain. In this case, it may be determined that the determining result indicating whether the IMS is restored is N. When the inactivation cause information is esm_cause=B (B is, for example, 39), the calling UE may determine that the IMS service may be restored within the first duration, so that the calling subsequently (for example, waits for a period of time, or waits for a timing duration, or periodically) tries to re-register in the IMS domain. In this case, it may be considered that the determining result indicating whether the IMS service may be restored within the first duration is Y.

**Table 4**

| Inactivation cause information | Determining result of whether an IMS service may be restored within a first duration | Whether a calling UE re-registers in an IMS domain |
|---|---|---|
| esm_cause=A | N | N |
| esm_cause=B | Y | Y |
| esm_cause=C | N | N |

If the determining result in step S702 is N, to be specific, the IMS service cannot be restored within the first duration, the IMS module informs the call management module of the result, and then step S703 is performed. If the determining result in step S702 is Y, to be specific, the IMS service can be restored within the first duration, the IMS module sends an IMS registration request message to the DS, RRC, and NNS module, to perform IMS domain registration. To be specific, subsequent step S710 is performed.

First, the situation in which the determining result in step S702 is N is described. The situation may include the following steps:
S703: The IMS module sends a CS domain redial indication message (CS real) to the call management module.

The CS domain redial indication message (CS redial) is used for indicating that the call management module switches to the CS domain for redial.

S704: The call management module selects a CS domain in response to the CS domain redial indication message (CS redial), and redials in the CS domain.

S705: The call management module sends a CS domain redial notification message to an NAS submodule.

S706: The NAS submodule sends, in response to the CS domain redial notification message, an extended service request message (extended service request Msg, MO CS fallback) to an LTE system.

The extended service request message is used for requesting to issue a 2G frequency point or a 3G frequency point within the LTE system.

S707: The LTE system sends an extended service response message to the NAS submodule of the calling UE.

The extended service response message includes a 2G frequency point or a 3G frequency point issued by the LTE system. The 2G frequency point or the 3G frequency point is used for communication of the calling UE on a 2G network and a 3G network. In this embodiment of this application, the communication may be specifically voice call communication.

S708: The calling UE resides in a CS.

In some embodiments, modules involved in residence in the CS domain include: a UI module, a modem, and the like.

S709: The calling UE initiates a CS domain call procedure.

In some embodiments, the calling UE performs a voice call to a 2G/3G network system in the CS domain. The 2G/3G network system performs a voice call to the core network device in the CS domain. Specifically, the call management module of the calling UE may send a CS domain call setup message to the 2G/3G network system. The 2G/3G network system sends the CS domain call setup message to the core network device.

Second, the situation in which the determining result in step S702 is Y is described. The situation may include the following steps:
Optionally, this embodiment of this application may further include step S710. To be specific, the IMS module of the calling UE sends an IMS registration request message to a DS submodule.

The IMS registration request message is used for indicating bearer reactivation and registration in the IMS domain.

S711A: A DS submodule of the calling UE sends an IMS PDN setup request message to the LTE system, where the IMS PDN setup request message carries EBI#5.

S711B: The LTE system forwards the IMS PDN setup request message to the core network device.

S712A: The core network device sends an IMS PDN setup response message to the LTE system.

The registration response message may be used for indicating whether an IMS default bearer is successfully set up.

S712B: The LTE system sends the IMS PDN setup response message to the DS submodule.

S713: The calling UE initiates an IMS domain registration procedure.

For a registration procedure of the calling UE in the IMS domain, refer to descriptions in the foregoing step S601. Details are not described herein again.

In some embodiments, after a default bearer of the IMS domain is set up, the calling UE may send an SIP message on this bearer. If a VoLTE user is expected to make a call by using the IMS domain, the VoLTE user first needs to register in the IMS domain by using SIP signaling.

In some embodiments, in this case, the IMS service of the core network device has been restored. Therefore, after completing registration of the calling UE, the core network device may further feed back an IMS registration response message to the calling UE, to indicate that the IMS registration is completed.

S714: The IMS module of the calling UE determines whether the IMS service is restored.

In some embodiments, the IMS module may determine IMS service restoration in the following manners: After the calling UE successfully registers in the IMS domain (for example, a registration success message sent by a network side is received), the IMS service is restored. Alternatively, optionally, after the calling UE receives an IMS service restoration notification message broadcast by the LTE system, the IMS service is restored. A manner of determining, by the calling UE, IMS service restoration is not limited in this embodiment of this application.

It should be noted that in this step, the determining whether the IMS service is restored means determining, within a first duration, whether the IMS service is restored. The first duration in this embodiment of this application may be flexibly set according to a communication requirement, for example, may be 3 s or 5 s.

If the determining result in this step is N, to be specific, the IMS service cannot be restored within the first duration, the IMS module may inform the call management module of the result, and the call management module may subsequently switch to the CS domain for redial. The process in which the call management module switches to the CS domain for redial may include the following steps:
S715: The IMS module sends a CS domain redial indication message to the call management module.
S716: The call management module selects a CS domain, and redials in the CS domain.
S717: The call management module sends a CS domain redial notification message to the DS, RRC, and NAS module.
S718: The DS, RRC, and NAS module sends an extended service request message to the LTE system, where the extended service request message is used for requesting the LTE system to issue a 2G/3G frequency point.
S719: The LTE system sends an extended service response message to the DS, RRC, and NAS module, where the extended service response message includes a 2G/3G frequency point issued by the LTE system.
S720: The calling UE resides in the CS domain.
S721: The calling UE initiates a CS domain call procedure.

For detailed descriptions of steps S715 to S721, refer to the relevant descriptions of steps S703 to S709. Details are not described herein again.

If the determining result in step S702 is that the IMS can be restored within the first duration, the IMS module may inform the call management module of the result. The call management module may subsequently re-register in the IMS domain. Specifically, the following steps may be included:
S722: The IMS module sends an IMS domain redial indication message to the call management module.

The IMS domain redial indication message is used for indicating that the call management module redials in the IMS domain, to perform a voice call service in the IMS domain.

S723: The call management module redials in the IMS domain.

S724: The calling UE initiates a call procedure in the IMS domain.

In some embodiments, the calling UE first makes a call to the LTE system. Then, the LTE system makes a call to the core network device in the IMS domain.

According to the voice call method provided in this embodiment of this application, after call initiation fails in an IMS domain, a calling UE determines, according to cause information returned by a network side, whether an IMS service may be restored within a first duration, tries to redial in the IMS domain if the IMS service can be restored within the first duration, and switches to a CS domain to perform a voice call service if the IMS service cannot be restored within the first duration. The method can improve a probability that a voice call service is successfully set up in the IMS domain. In particular, a voice call service that can be clearly performed in the IMS domain can be prevented from being directly switched to the CS domain with poor call quality, resulting in poor call experience for a user.

Solution 2: The trigger condition is: starting a timer, redialing in the IMS domain again, if a timing duration expires and redialing again (or re-registration) of the calling UE in the IMS domain still fails, switching to the CS domain for redial, and performing a voice call service in the CS domain; and if the timing duration does not expire and redialing again (or re-registration) of the calling UE in the IMS domain is successful, performing a voice call service in the IMS domain.

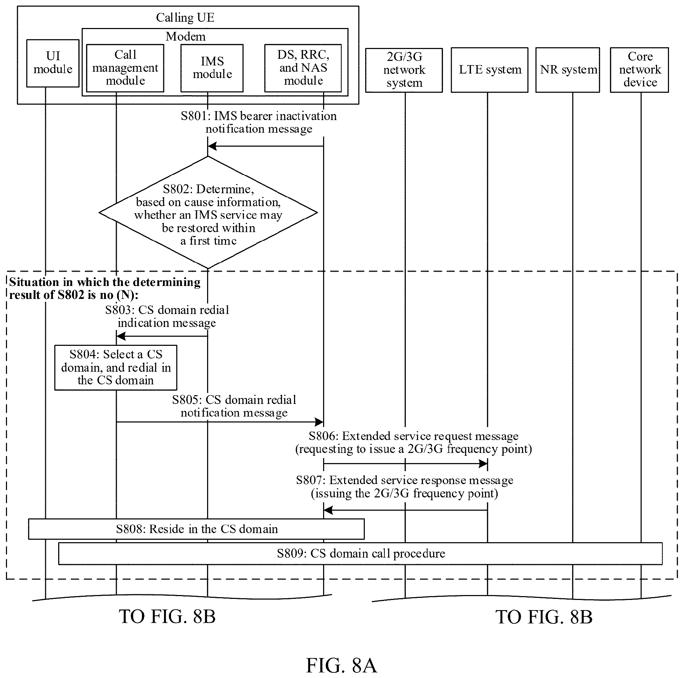

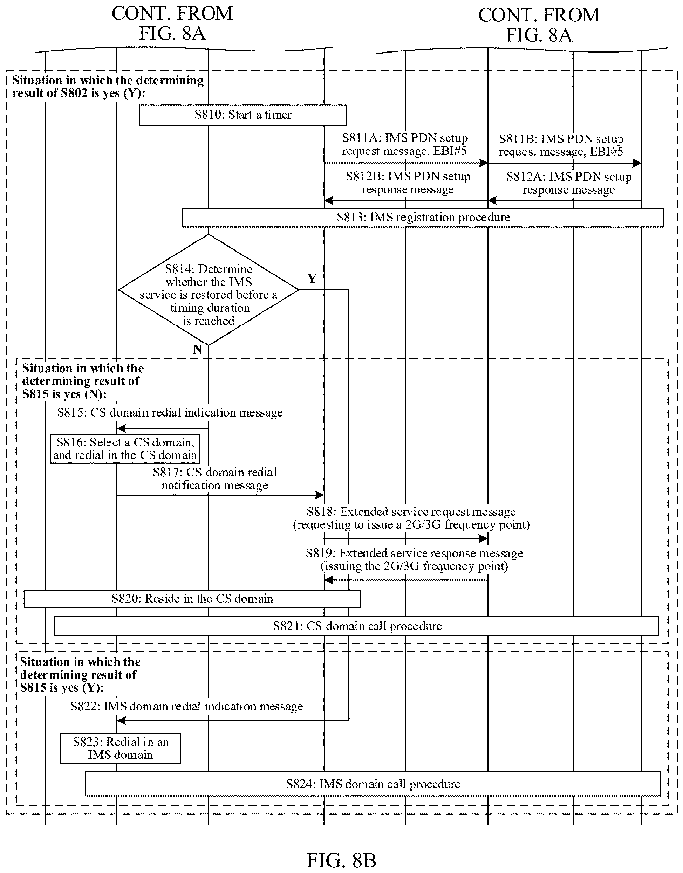

For example, FIG. 8A and FIG. 8B show a schematic flowchart of another voice call method according to an embodiment of this application. The procedure may be performed after the foregoing step S614B. The procedure may be executed by a calling UE (such as a mobile phone), a network system, a core network device, and the like, and may specifically include the following steps:

It should be noted that a difference between the embodiment of FIG. 8A and FIG. 8B and the embodiment of FIG. 7A and FIG. 7B mainly lies in that, after it is determined that an IMS service can be restored within a first duration, in the method of the embodiment of FIG. 8A and FIG. 8B, a timer is started to detect whether the IMS service can be restored within a timing duration. If the IMS service can be restored within the timing duration, a call is subsequently made in an IMS domain. To be specific, as compared with the embodiment of FIG. 7A and FIG. 7B, the timer is added to the method in the embodiment of FIG. 8A and FIG. 8B, to further limit duration of IMS service restoration, so as to avoid that the duration of IMS service restoration is excessively long, resulting in that a user waits for excessively long and call experience is affected.

S801: A DS, RRC, and NAS module of a calling UE sends an IMS bearer inactivation notification message to an IMS module of the calling UE.

The IMS bearer inactivation notification message is used for indicating that an IMS default bearer is inactivated.

S802: The IMS module of the calling UE determines, based on cause information for IMS bearer inactivation, whether an IMS service may be restored within a first duration.

It should be noted that the cause information for failure of call initiation in an IMS domain described herein may be a cause why an IMS bearer is inactive. The calling UE may determine, based on cause information returned by a core network side, whether the IMS service may be restored within the first duration.

If a determining result in this step is N, to be specific, the IMS service cannot be restored within the first duration, a DS submodule of a call management module of the calling UE may inform an IMS submodule of the result. Then, step S803 may be performed. If the determining result in this step is Y, to be specific, the IMS service can be restored within the first duration, a subsequent step S810 may be performed.

First, the situation in which the determining result in step S802 is N is described. The situation may include the following steps:
S803: The IMS module sends a CS domain redial indication message (CS real) to the call management module.

The CS domain redial indication message (CS redial) is used for indicating that the call management module switches to the CS domain for redial.

S804: The call management module selects a CS domain in response to the CS domain redial indication message (CS redial), and redials in the CS domain.

S805: The call management module sends a CS domain redial notification message to an NAS submodule.

S806: The NAS submodule sends, in response to the CS domain redial notification message, an extended service request message (extended service request Msg, MO CS fallback) to an LTE system.

The extended service request message is used for requesting to issue a 2G frequency point or a 3G frequency point within the LTE system.

S807: The LTE system sends an extended service response message to the NAS submodule of the calling UE.

The extended service response message includes a 2G frequency point or a 3G frequency point issued by the LTE system. The 2G frequency point or the 3G frequency point is used for communication of the calling UE on a 2G network and a 3G network. In this embodiment of this application, the communication may be specifically voice call communication.

S808: The calling UE resides in a CS.

In some embodiments, modules involved in residence in the CS domain include: a UI module, a modem, and the like.

S809: The calling UE initiates a CS domain call procedure.

In some embodiments, the calling UE performs a voice call to a 2G/3G network system in the CS domain. The 2G/3G network system performs a voice call to a core network device in the CS domain. Specifically, the call management module of the calling UE may send a CS domain call setup message to the 2G/3G network system. The 2G/3G network system sends the CS domain call setup message to the core network device.

Second, the situation in which the determining result in step S802 is Y is described. The situation may include the following steps:
S810: The calling UE starts a timer.

A preset duration of the timer may be less than or equal to the first duration.

In some embodiments, the duration of the timer may be set according to a communication requirement. Alternatively, the duration of the timer is set according to the duration in which the IMS service needs to be restored. For example, when the duration in which the IMS service needs to be restored is 3 s, the duration of the timer may be set to 3 s, and when the duration in which the IMS service needs to be restored is 5 s, the duration of the timer may be set to 5 s. This is not limited in this embodiment of this application.

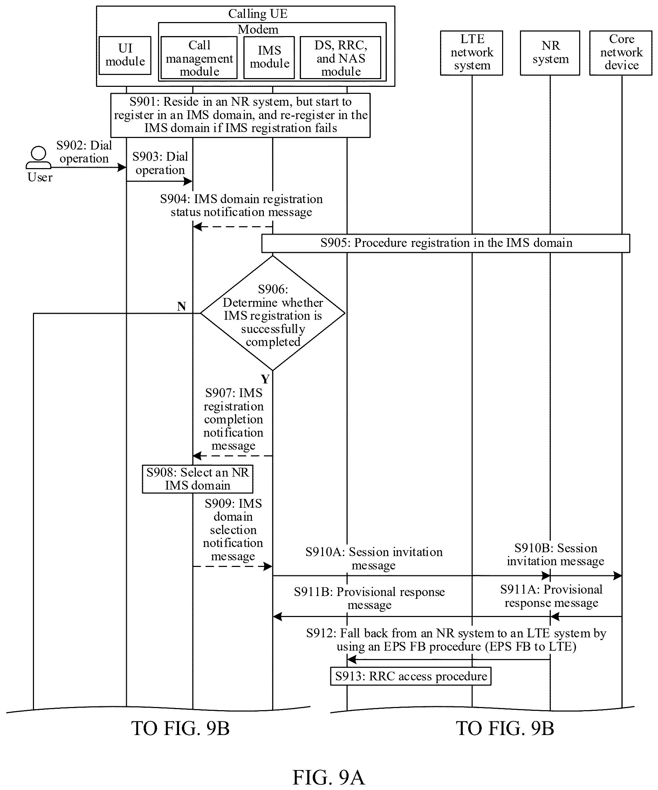

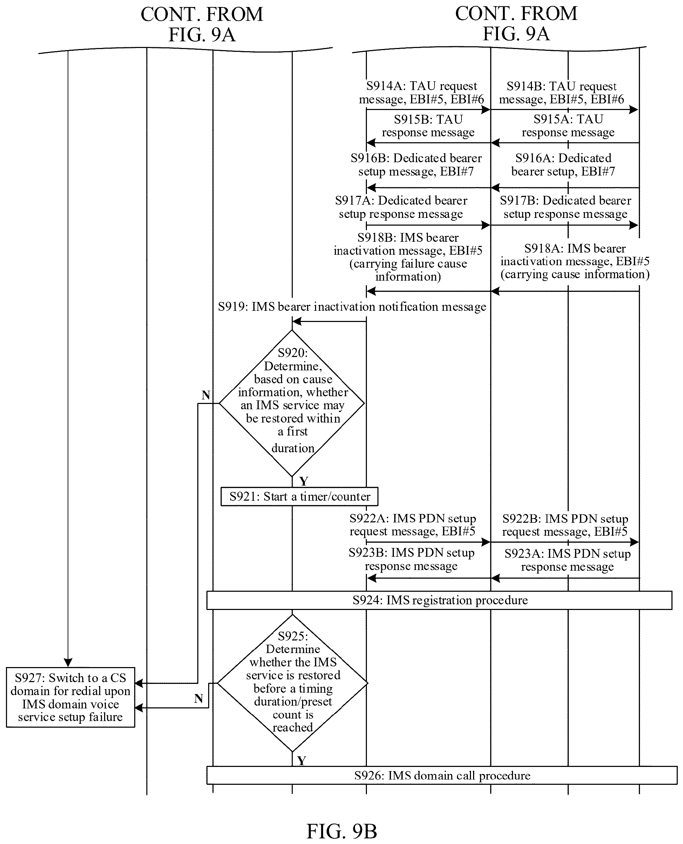

In some embodiments, the timer may be integrated in the call management module (not shown in FIG. 9A and FIG. 9B) of the calling UE, or may be used as an independent module. When a determining result in step S902 is that the IMS service may be restored within the first duration, the calling UE may start a timer. To be specific, timing starts.

A timing duration is set by using the timer, to further limit duration of IMS service restoration, so as to avoid that the duration of IMS service restoration is excessively long, resulting in that a user waits for excessively long and call experience is affected.

During the timing of the timer, the calling UE, the LTE system, and the like may perform the following step S911A:

S811A: A DS submodule of the calling UE sends an IMS PDN setup request message to the LTE system, where the IMS PDN setup request message carries EBI#5.

In some embodiments, the IMS PDN setup request message carries EBI#5 (corresponding to QCI=5). To be specific, the calling UE needs to set up or support an IMS default bearer.

S811B: The LTE system sends an IMS PDN setup request message to a core network device, where the IMS PDN setup request message carries EBI#5.

The LTE system may send the IMS PDN setup request message to the core network device in a transparent transmission manner.

S812A: The core network device sends an IMS PDN setup response message to the LTE system.

The registration response message is used for indicating whether an IMS default bearer is successfully set up.

S812B: The LTE system sends the IMS PDN setup response message to the DS submodule.

S813: The calling UE initiates an IMS domain registration procedure.

In some embodiments, in this case, the IMS service of the core network device has been restored. Therefore, after completing registration of the calling UE, the core network device may further feed back an IMS registration response message to the calling UE, to indicate that the IMS registration is completed.

In some embodiments, the registration procedure may include: The calling UE sends an IMS registration request message to the LTE system. Then, the LTE system sends the IMS registration request message to the core network device. The core network device sends a registration response message to the LTE system, where the registration response message is used for indicating whether registration is successful. The LTE system forwards the registration response message to the calling UE.

S814: The IMS module of the calling UE determines whether the IMS service is restored before time expires.

In some embodiments, the manner in which the calling UE determines whether the IMS service is restored before time expires may include: When the calling UE successfully registers in the IMS domain (for example, a registration success message sent by a network side is received) before time expires, the IMS service is restored before time expires. Alternatively, optionally, after the calling UE receives, before time expires, an IMS service restoration notification message broadcast by the LTE system, the IMS service is restored before time expires. A manner of determining, by the calling UE, IMS service restoration before time expires is not limited in this embodiment of this application.

The timing duration in this embodiment of this application may be flexibly set according to a communication requirement. Optionally, the timing duration may be less than the first duration, for example, may be 3 s or 5 s.

In some embodiments, if the determining result in this step is N, to be specific, the IMS service cannot be restored before time expires, the IMS module of the calling UE may inform the call management module of the result, and the call management module may subsequently switch to the CS domain for redial. The process in which the call management module switches to the CS domain for redial may include the following steps:

S815: The IMS module sends a CS domain redial indication message to the call management module.

S816: The call management module selects a CS domain, and redials in the CS domain.

S817: The call management module sends a CS domain redial notification message to the DS, RRC, and NAS module.

S818: The DS, RRC, and NAS module sends an extended service request message to the LTE system, where the extended service request message is used for requesting the LTE system to issue a 2G/3G frequency point.

S819: The LTE system sends an extended service response message to the DS, RRC, and NAS module, where the extended service response message includes a 2G/3G frequency point issued by the LTE system.

S820: The calling UE resides in the CS domain.

S821: The calling UE initiates a CS domain call procedure.

For detailed descriptions of steps S815 to S821, refer to the relevant descriptions of steps S803 to S809. Details are not described herein again.

If the determining result in step S802 is Y, to be specific, the IMS service can be restored before time expires, the IMS module may inform the call management module of the result. The call management module may subsequently re-register in the IMS. The process of re-registering in the IMS domain may include the following steps:
S822: The IMS module of the calling UE sends an IMS domain redial indication message to the call management module.

The IMS domain redial indication message is used for indicating that the call management module redials in the IMS domain, to perform a voice call service.

S823: The call management module of the calling UE redials in the IMS domain.

S824: The calling UE initiates a call procedure in the IMS domain. In some embodiments, the calling UE first makes a call to the LTE system. Then, the LTE system makes a call to the core network device in the IMS domain.

According to the voice call method provided in this embodiment of this application, after call initiation fails in an IMS domain, a calling UE determines, according to a failure cause returned by a network side, whether an IMS service may be restored within a first duration, tries to redial in the IMS domain if the IMS service can be restored within the first duration, and switches to a CS domain to perform a voice call service if the IMS service cannot be restored within the first duration. The method can improve a probability that a voice call service is successfully set up in the IMS domain. In particular, a voice call service that can be clearly performed in the IMS domain can be prevented from being directly switched to the CS domain with poor call quality, resulting in poor call experience for a user.

The voice call method provided in this embodiment of this application may further include solution 3. In solution 3, when obtaining, based on the cause information, that the IMS service may be restored within the first time, the calling UE may start a counter, and redial in the IMS domain again. If a count of re-registrations of the calling UE in the IMS domain exceeds a preset count, the calling UE still fails in redialing (or re-registration) in the IMS domain, the CS domain is switched to for redial, and a voice call service is performed in the CS domain. If the count of re-registrations of the calling UE in the IMS domain does not exceed or is equal to the preset count, redialing again (or re-registration) of the calling UE in the IMS domain is successful, and a voice call service is performed in the IMS domain.

In solution 3 provided in this embodiment of this application, the counter may be configured to count registrations of the calling UE in the IMS domain. After the counter is started, the counter keeps counting the registrations of the calling UE in the IMS domain until the preset count is reached or until the calling UE successfully registers in the IMS domain.

In some embodiments, the preset count of the counter may be set according to a communication requirement. Alternatively, the preset count, such as 5 or 10, of the counter is set according to time required for IMS service restoration. This is not limited in this embodiment of this application.

In some embodiments, the counter may be integrated in the call management module of the calling UE, or may be used as an independent module.

In some embodiments, when a determining result of the calling UE in solution 3 is that the IMS service may be restored within the first duration, the calling UE may start an indication counter, to be specific, start counting re-registrations of the calling UE in the IMS domain.

In some embodiments, the manner in which the calling UE determines whether the IMS service is restored before the preset count is reached may include: When the calling UE successfully registers in the IMS domain (for example, a registration success message sent by a network side is received) before the count of re-registrations of the calling UE in the IMS domain reaches the preset count, the IMS service is restored before the preset count is reached. Alternatively, optionally, after the calling UE receives, before the count of re-registrations of the calling UE in the IMS domain reaches the preset count, an IMS service restoration notification message broadcast by the LTE system, the IMS service is restored before the preset count is reached. A manner of determining, by the calling UE, IMS service restoration before the preset count is reached is not limited in this embodiment of this application.

For a specific implementation process of solution 3, refer to the procedure shown in the embodiment of FIG. 8A and FIG. 8B, and a main difference between the solution and the embodiment of FIG. 8A and FIG. 8B lies in that: (1) Different from step S810 in the embodiment of FIG. 8A and FIG. 8B, in solution 3, the calling UE starts a counter to count re-registration tries of the calling UE in the IMS domain. (2) Different from step S814 in the embodiment of FIG. 8A and FIG. 8B, in solution 3, the calling UE determines whether the IMS service is restored when the preset count is reached.

It should be understood that, similar to an improvement effect in the embodiment of FIG. 8A and FIG. 8B, compared with the embodiment of FIG. 7A and FIG. 7B, in the method in solution 3, by adding the counter, and switching to the CS domain for redial when the count of re-registrations of the calling UE in the IMS domain exceeds the preset count, the duration of IMS service restoration can be further limited, so as to avoid that the duration of IMS service restoration is excessively long, resulting in that a user waits for excessively long and call experience is affected.

According to the voice call method provided in this embodiment of this application, after call initiation fails in an IMS domain, a calling UE determines, according to a failure cause returned by a network side, whether an IMS service may be restored when a count of registrations of the UE in the IMS domain is within a preset count, tries to redial in the IMS domain if the IMS service can be restored when the count of registrations of the UE in the IMS domain is within the preset count, and switches to a CS domain to perform a voice call service if the IMS service cannot be restored when the count of registrations of the UE in the IMS domain is within the preset count. The method can improve a probability that a voice call service is successfully set up in the IMS domain. In particular, a voice call service that can be clearly performed in the IMS domain can be prevented from being directly switched to the CS domain with poor call quality, resulting in poor call experience for a user.

Optionally, this application may further include solution 4. An application scenario of solution 4 may include: In a scenario of broadcast television or some other voice call service that cannot use a CS domain currently, when a UE does not perform IMS registration during setup of a voice call service or the UE is performing IMS registration during setup of the voice call service, the voice call service cannot be set up in time. In this case, the UE may wait to complete IMS registration, and then implement the voice call service. The following describes an underlying interaction procedure involved in this scenario with reference to the accompanying drawings.

For example, FIG. 9A and FIG. 9B show a schematic flowchart of still another voice call method according to an embodiment of this application. The procedure may include the following steps:
S901: Reside in an NR system, but start to register in an IMS domain, and re-register in the IMS domain if IMS registration fails.

It should be noted that different from the embodiments of FIG. 7A, FIG. 7B, FIG. 8A, and FIG. 8B, in this embodiment, although a calling UE resides in the NR, the calling UE has not registered in the IMS domain yet, but is to register in the IMS domain. In addition, if IMS registration fails, re-registration is performed in the IMS domain.

For a process in which the calling UE accesses the NR, refer to the foregoing related descriptions. Details are not described herein again.

S902: A calling UE receives a dial operation entered by a user through a UI module.

S903: The UI module of the calling UE transmits the dial operation to a call management module of the calling UE.

In some embodiments, when receiving the dial operation, the calling UE may further start to perform an operation of registering in the IMS domain. To be specific, the following steps are performed.

Optionally, this embodiment of this application may further include step S904. To be specific, an IMS module sends an IMS domain registration status notification message to the call management module.

The IMS domain registration status notification message is used for indicating that the calling UE has not registered in the IMS domain currently, or is used for indicating that the calling UE starts to register in the IMS domain currently.

S905: The calling UE initiates a registration procedure in the IMS domain.

Before the calling UE registers in the IMS domain, a default bearer in the IMS domain needs to be set up. The process may include: The calling UE sends a registration request message to an NR network system. The registration request message may include an EBI of #5, namely a request for setting up a default bearer supporting completion of IMS registration of the UE. After receiving the registration request message, the NR system may forward the registration request message to a core network and the IMS module. The core network and the IMS module set up, in response to the registration request message, a default bearer on which IMS registration is completed for the calling UE. After a default bearer of the IMS domain is set up, the calling UE may send an SIP message on this bearer.

S906: The calling UE determines whether IMS registration is successfully completed.

Specifically, this step may be performed by the IMS module of the calling UE. For a registration procedure of the calling UE in the IMS domain, refer to the foregoing step S601. Details are not described herein again.

If a determining result in this step is N, to be specific, the calling UE does not successfully register, step S927 is performed subsequently. To be specific, an IMS domain voice service fails in setup, and the call management module of the calling UE switches to the CS domain for redial. If the determining result in this step is Y, to be specific, the calling UE successfully completes registration, step S907 may be optionally performed subsequently.

The following describes a situation in which the calling UE successfully completes registration in the IMS domain.

Optionally, this embodiment of this application may further include step S907. To be specific, the IMS module of the calling UE sends an IMS registration completion notification message to the call management module.

In some embodiments, the IMS registration completion notification message is used for indicating that the calling UE completes registration in the IMS domain.

In some embodiments, after the calling UE completes registration in the IMS domain, the call management module of the calling UE may send a dial instruction corresponding to the dial operation to the IMS module of the calling UE.

S908: The call management module of the calling UE selects the NR IMS domain.

Optionally, this embodiment of this application may further include step S909. To be specific, the call management module sends an IMS domain selection notification message to the IMS module.

The IMS domain selection notification message is used for indicating that the IMS domain has been selected.

S910A: The IMS module of the calling UE sends a session invitation message (invite) to the NR system.

S910B: The NR system sends the session invitation message (invite) to a core network device.

In some embodiments, the NR system may forward the session invitation message to the core network device in a transparent transmission manner.

S911A: The core network device sends a provisional response message to the NR system.

The provisional response message may be used for indicating that the called UE has received the session invitation message (invite). The provisional response message may alternatively be described as 100 trying signaling or 100 trying.

S911B: The NR system sends a provisional response message to the calling UE.

In some embodiments, the NR system may forward the provisional response message to the calling UE in a transparent transmission manner. Specifically, the NR system may transparently transmit the provisional response message to the IMS module of the calling UE.

Optionally, In some scenarios, if a 5G network does not support a VoNR service or a current 5G network does not have a condition for performing VoNR, the NR system may instruct the calling UE to switch from the 5G network to a 4G network to set up a voice call in the IMS domain. In this case, the NR system may perform the following step S912:

S912: The NR system instructs an RRC submodule of the calling UE to fall back from the NR system to the LTE system by using an EPS FB procedure (EPS FB to LTE).

S913: The RRC submodule of the calling UE initiates an RRC access procedure.

For an RRC access procedure, refer to the foregoing related descriptions. Details are not described herein again.

S914A: The calling UE sends a TAU request message to an LTE system, where the TAU request message is used for initiating a TAU procedure, and the TAU request message carries EBI#5 and EBI#6.

Specifically, the call management module of the calling UE may perform this step.

S914B: The LTE system sends a TAU request message to the core network device, where the TAU request message is used for initiating a TAU procedure, and the TAU request message carries EBI#5 and EBI#6.

S915A: The core network device sends a TAU response message to the LTE system.

In some embodiments, the TAU response message may indicate states of an IMS default bearer and a data service bearer that are stored (or recorded) by the core network device.

S915B: The LTE system sends a TAU response message to the calling UE.

In some embodiments, the LTE system sends a TAU response message to the NAS submodule in the calling UE.

S916A: The core network device sends a dedicated bearer setup message to the LTE system, where the dedicated bearer setup message carries EBI#7.

S916B: The LTE system sends a dedicated bearer setup message to the calling UE, where the dedicated bearer setup message carries EBI#7.

S917A: The calling UE sends a dedicated bearer setup response message to the LTE system, where the dedicated bearer response message carries EBI#7.

In some embodiments, in response to the dedicated bearer setup message, the DS submodule of the calling UE may send a dedicated bearer setup response message to the LTE system, where the dedicated bearer setup response message may include related parameters for setting up a dedicated bearer, and the like.

S917B: The LTE system sends a dedicated bearer setup response message to the core network device.

S918A: The core network device sends an IMS bearer inactivation message to the LTE system, where the IMS bearer inactivation message carries EBI#5 and cause information.

The cause information is used for indicating whether an IMS service may be restored within a first duration. For example, when the cause information is esm_cause=39, an IMS service may be restored within the first duration, and needs to be reactivated. When the cause information is esm_cause=38, the IMS service cannot be restored within the first duration.

S918B: The LTE system sends an IMS bearer inactivation message to the calling UE, where the IMS bearer inactivation message carries EBI#5 and cause information.

In some embodiments, the LTE system may specifically send the IMS bearer inactivation message to the DS submodule. The LTE system may send the IMS bearer inactivation message to the calling UE in a transparent transmission manner.

S919: A DS, RRC, and NAS module of a calling UE sends an IMS bearer inactivation notification message to an IMS module of the calling UE.

The IMS bearer inactivation notification message is used for indicating that an IMS default bearer is inactivated.

S920: The IMS module of the calling UE determines, based on cause information for IMS bearer inactivation, whether an IMS service may be restored within a first duration.

If a determining result in this step is N, to be specific, the IMS service cannot be restored within the first duration, step S927 is performed. To be specific, an IMS domain voice service fails in setup, and the CS domain is switched to for redial. If the determining result in this step is Y, to be specific, the IMS service can be restored within the first duration, the following steps may be performed subsequently.

S921: Start a timer/counter.

When the timer is started, for a procedure of the timer, refer to descriptions in FIG. 8A and FIG. 8B. Details are not described herein again.

S922A: The calling UE sends an IMS PDN setup request message to the LTE system, where the IMS PDN setup request message carries EBI#5.

S922B: The LTE system sends an IMS PDN setup request message to a core network device, where the IMS PDN setup request message carries EBI#5.

S923A: The core network device sends an IMS PDN setup response message to the LTE system.

The registration response message may be used for indicating whether an IMS default bearer is successfully set up.

S923B: The LTE system sends the IMS PDN setup response message to the DS submodule.

S924: The calling UE initiates an IMS domain registration procedure.

In some embodiments, after a default bearer of the IMS domain is set up, the calling UE may send an SIP message on this bearer. If a VoLTE user is expected to make a call by using the IMS domain, the VoLTE user first needs to register in the IMS domain by using SIP signaling.

In some embodiments, in this case, the IMS service of the core network device has been restored. Therefore, after completing registration of the calling UE, the core network device may further feed back an IMS registration response message to the calling UE, to indicate that the IMS registration is completed.

S925: The IMS module of the calling UE determines whether the IMS service is restored before a timing duration or a preset count is reached.

In some embodiments, the manner in which the calling UE determines whether the IMS service is restored may include: After the calling UE successfully registers in the IMS domain (for example, a registration success message sent by a network side is received), the IMS service is restored. Alternatively, optionally, after the calling UE receives an IMS service restoration notification message broadcast by the LTE system, the IMS service is restored. A manner of determining, by the calling UE, IMS service restoration is not limited in this embodiment of this application.

If a determining result in this step is N, to be specific, the IMS service cannot be restored before the timing duration or the preset count is reached, step S927 may be performed subsequently. To be specific, an IMS domain voice service fails in setup, and the CS domain is switched to for redial. If the determining result in this step is Y, to be specific, the IMS service can be restored before the timing duration or the preset count is reached, step S926 may be performed subsequently. To be specific, a call procedure is performed in the IMS domain.

According to the voice call method provided in this embodiment of this application, in a scenario in which a CS domain cannot be used and a calling UE does not complete registration in an IMS domain during dialing, the calling UE waits for a period of time during call initiation, and the calling UE registers in the IMS domain. If the registration is successful, the calling UE sets up a voice call service in the IMS domain to perform a voice call. The method can improve a probability that a voice call service is performed in an IMS domain, thereby being beneficial to improving quality of the voice call service and improving user experience.

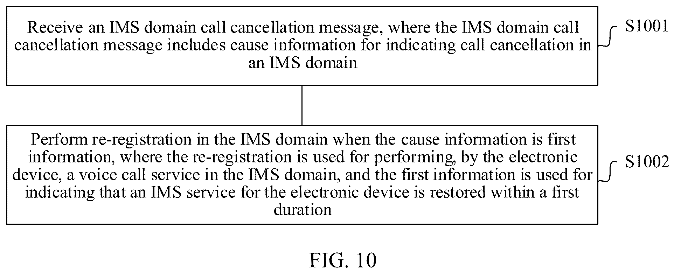

For example, FIG. 10 shows a schematic flowchart of still another voice call method according to an embodiment of this application. The procedure may be executed by an electronic device, and may specifically include the following steps:

S1001: Receive an IMS domain call cancellation message, where the IMS domain call cancellation message includes cause information for indicating call cancellation in an IMS domain.

The electronic device herein may be an electronic device initiating a voice call, and may correspond to the foregoing calling UE. The failure of call initiation of the electronic device in the IMS domain may specifically correspond to IMS bearer inactivation of the electronic device. Cause information for failure of call initiation of the electronic device in the IMS domain may alternatively correspond to cause information for IMS bearer inactivation.

S1002: Perform re-registration in the IMS domain when the cause information is first information, where the re-registration is used for performing, by the electronic device, a voice call service in the IMS domain, and the first information is used for indicating that an IMS service for the electronic device is restored within a first duration.

In some embodiments, a CS domain is switched to for redial when the cause information is second information, where the redial is used for the electronic device to perform a voice call service in the CS domain, and the second information is used for indicating that the IMS service for the electronic device fails to be restored within the first duration.

In some embodiments, the performing, by the electronic device, re-registration in the IMS domain when the cause information is first information specifically includes: starting a timer, where the timer is set with a timing duration; and performing, by the electronic device, re-registration in the IMS domain within the timing duration.

In some embodiments, the timing duration is less than or equal to the first duration.

In some embodiments, the CS domain is switched to for redial and a voice call service is performed in the CS domain if the timing duration is reached and the re-registration in the IMS domain still fails. Redial is performed in the IMS domain and a voice call service is performed in the IMS domain if the timing duration is not reached and the re-registration in the IMS domain is successful.

That the re-registration of the electronic device in the IMS domain still fails may mean that when the electronic device tries to re-set up an IMS default bearer with a core network, setup of the IMS default bearer fails.

In some embodiments, the method further includes: starting a counter, where the counter is configured to count, upon call cancellation of the electronic device in the IMS domain, re-registrations of the electronic device in the IMS domain; and performing, by the electronic device, re-registration in the IMS domain.

In some embodiments, the CS domain is switched to for redial and a voice call service is performed in the CS domain if a preset count is reached and the re-registration in the IMS domain still fails. Redial is performed in the IMS domain and a voice call service is performed in the IMS domain if a preset count is not reached and the re-registration in the IMS domain is successful.

In some embodiments, the method further includes: residing, by the electronic device, in a new radio (NR) system, and having registered in an NR IMS domain; or, residing, by the electronic device, in a long term evolution (LTE) system, and having registered in an LTE IMS domain.

In some embodiments, the access network device is an access network device of a 5^{th}-generation mobile communication (5G) network, or an access network device of a 4^{th}-generation mobile communication (4G) network.

In some embodiments, the receiving, by the electronic device, an IMS domain call cancellation message specifically includes: receiving, by the electronic device, the IMS domain call cancellation message forwarded by the access network device from a core network.

In some embodiments, when the electronic device resides in the NR system and has registered in the NR IMS domain, the method further includes: receiving a dial operation entered by a user; selecting the NR IMS domain in response to the dial operation; sending a session invitation message to the NR system, where the session invitation message is used for requesting to set up a session connection with the core network device; receiving a provisional response message forwarded by the NR system from the core network device, where the provisional response message is used for indicating that a called electronic device has received the session invitation message; and receiving a fallback indication message sent by the NR system, where the fallback indication message is used for indicating that the electronic device falls back to the LTE system.

The called electronic device may be an electronic device called by a voice, and may correspond to a called UE below.

In some embodiments, the switching to a CS domain for redial when the cause information is second information specifically includes: selecting the CS domain; sending an extended service request message to the LTE system, where the extended service request message is used for requesting the LTE system to issue a 2^{nd}-generation (2G) frequency point or a 3^{rd}-generation (3G) frequency point; receiving the 2G frequency point or the 3G frequency point sent by the LTE system; and initiating, in the CS domain, a call by using the 2G frequency point or the 3G frequency point.

According to the voice call method provided in this embodiment of this application, after call initiation fails in an IMS domain, an electronic device determines, according to a failure cause returned by a network side, whether an IMS service may be restored within a first duration, tries to redial in the IMS domain if the IMS service can be restored within the first duration, and switches to a CS domain to perform a voice call service if the IMS service cannot be restored within the first duration. The method can improve a probability that a voice call service is successfully set up in the IMS domain. In particular, a voice call service that can be clearly performed in the IMS domain can be prevented from being directly switched to the CS domain with poor call quality, resulting in poor call experience for a user.

In addition, an embodiment of this application further provides a method for improving voice call quality based on an IMS. The method is applied to an access network device, and includes: receiving an IMS domain call cancellation message sent by a core network device, where the IMS domain call cancellation message includes cause information for indicating call initiation failure of an electronic device in an IMS domain; and forwarding the IMS domain call cancellation message to the electronic device, and performing re-registration in the IMS domain when the cause information is first information, where the re-registration is used for performing, by the electronic device, a voice call service in the IMS domain, and the first information is used for indicating that an IMS service for the electronic device is restored within a first duration.

In some embodiments, a CS domain is switched to for redial when the cause information is second information, where the redial is used for the electronic device to perform a voice call service in the CS domain, and the second information is used for indicating that the IMS service for the electronic device fails to be restored within the first duration.

In some embodiments, the method further includes: receiving a session invitation message sent by the electronic device in the IMS domain, where the session invitation message is used for requesting to set up a session connection with the core network device; forwarding the session invitation message to the core network device; receiving a provisional response message sent by the core network device, where the provisional response message is used for indicating that a called electronic device has received the session invitation message; and forwarding the provisional response message to the electronic device.

In some embodiments, the access network device is an access network device of a 5G network, or the access network device is an access network device of a 4G network.

In some embodiments, the method further includes: residing, by the electronic device, in an NR system, and having registered in an NR IMS domain; or, residing, by the electronic device, in an LTE system, and having registered in an LTE IMS domain.

In some embodiments, when the electronic device resides in the NR system and has registered in the NR IMS domain, the method further includes: sending, by the access network device of the 5G network, a fallback indication message to the electronic device, where the fallback indication message is used for indicating that the UE falls back to the LTE system.

In some embodiments, the method further includes: setting up, by the access network device of the 4G network, a TAU procedure with the electronic device after the electronic device accesses the LTE system by RRC, where the TAU procedure includes a bearer that supports the electronic device to complete registration in the IMS domain; setting up, by the access network device of the 4G network, the TAU procedure with the core network device; setting up, by the access network device of the 4G network and the electronic device, a dedicated bearer for performing a voice call service in the IMS domain; setting up, by the access network device of the 4G network and the core network device, a dedicated bearer for performing a voice call service in the IMS domain; receiving, by the access network device of the 4G network, the IMS domain call cancellation message sent by the core network device, where the IMS domain call cancellation message includes cause information for indicating call cancellation of the electronic device in an IMS domain; and forwarding, by the access network device of the 4G network, the IMS domain call cancellation message to the electronic device.

In some embodiments, the switching, by the electronic device, to a CS domain for redial when the cause information is second information specifically includes: receiving, by the access network device of the 4G network, an extended service request message sent by the electronic device, where the extended service request message is used for requesting the LTE system to issue a 2G frequency point or a 3G frequency point; and sending, by the access network device of the 4G network, the 2G frequency point or the 3G frequency point to the electronic device, where the 2G frequency point or the 3G frequency point is used for initiating a call by the electronic device in the CS domain.

According to the voice call method provided in this embodiment of this application, in a call initiation stage, an electronic device (IMS) detects loss of an IMS bearer, determines a cause for the loss, and predicts whether rapid restoration may be performed. If the rapid restoration may be performed, a timer is started. Once an IMS service is restored before the timer expires, the electronic device redials (redial) in an IMS domain, and if the IMS service is not restored after the expiration, the electronic device performs CS redial (CS redial). If it is determined that the IMS service cannot be rapidly restored, CS redial is directly performed.

It should be noted that a difference between the voice call method provided in this embodiment of this application and the embodiment of FIG. 1 lies in that CS Redial is absent in the procedure in FIG. 1 inevitably. However, CS has a long call initiation time, and voice quality of a call is also poor. However, after the technology of this application is introduced, it can be ensured that a voice call has a high probability of succeeding in an IMS domain, thereby reducing a voice quality problem and fault, submitting a calling success rate, and improving user experience.

Based on a same technical concept, an embodiment of this application further provides an electronic device. The electronic device supports a voice call service in an IMS domain and a CS domain. The electronic device includes: one or more processors; and one or more memories. The one or more memories store one or more computer programs. The one or more computer programs include instructions. When executed by the one or more processors, the instructions enable the electronic device to perform one or more steps of any one of the foregoing methods.

Based on a same technical concept, an embodiment of this application further provides an access network device, including: one or more processors; and one or more memories. The one or more memories store one or more computer programs. The one or more computer programs include instructions. When executed by the one or more processors, the instructions enable the access network device to perform one or more steps of any one of the foregoing methods.

Based on a same technical concept, an embodiment of this application further provides a core network device, including: one or more processors; and one or more memories. The one or more memories store one or more computer programs. The one or more computer programs include instructions. When executed by the one or more processors, the instructions enable the core network device to perform one or more steps of any one of the foregoing methods.

Based on a same technical concept, an embodiment of this application further provides a communication system, including an electronic device, an access network device, and a core network device. The electronic device, the access network device, and the core network device are separately configured to perform respective functions in any one of the foregoing methods.

Based on a same technical concept, an embodiment of this application further provides a computer-readable storage medium. The computer-readable storage medium stores computer-executable program instructions. When run on a computer, the computer-executable program instructions enable a computer or a processor to perform one or more steps of any one of the foregoing methods.

Based on a same technical concept, an embodiment of this application further provides a computer program product including instructions. The computer program product includes a computer program code. When run on a computer, the computer program code enables a computer or a processor to perform one or more steps of any one of the foregoing methods.

All or some of the foregoing embodiments may be implemented by software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedures or functions according to this embodiment of this application are generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, by using a coaxial cable, an optical fiber, or a digital subscriber line) or wireless (for example, infrared, radio, or microwave) manner. The computer-readable storage medium may be any usable medium that can be accessed by the computer, or a data storage device, such as a server or a data center in which one or more usable mediums are integrated. The usable medium may be a magnetic medium (such as a soft disk, a hard disk, or a magnetic tape), an optical medium (such as a DVD), a semiconductor medium (such as a solid state disk (solid state disk, SSD)), etc.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes: various media that may store a program code, for example, a ROM, a random access memory (RAM), a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A voice call method, applied to an electronic device, the method comprising:
receiving an Internet protocol multimedia subsystem (IMS) domain call cancellation message, wherein the IMS domain call cancellation message comprises cause information for indicating call cancellation in an IMS domain; and
performing re-registration in the IMS domain when the cause information is first information, wherein the re-registration is used for performing, by the electronic device, a voice call service in the IMS domain, and the first information is used for indicating that an IMS service for the electronic device is restored within a first duration.

2. The method according to claim 1, further comprising:
switching to a circuit switched (CS) domain for redial when the cause information is second information, wherein the redial is used for the electronic device to perform a voice call service in the CS domain, and the second information is used for indicating that the IMS service for the electronic device fails to be restored within the first duration.

3. The method according to claim 1 or 2, wherein the performing re-registration in the IMS domain when the cause information is first information specifically comprises:
starting a timer, wherein the timer is set with a timing duration; and
performing re-registration in the IMS domain within the timing duration.

4. The method according to claim 3, wherein the timing duration is less than or equal to the first duration.

5. The method according to claim 3 or 4, wherein further comprising:
switching to the CS domain for redial and performing a voice call service in the CS domain if the timing duration is reached and the re-registration in the IMS domain still fails; or
redialing in the IMS domain and performing a voice call service in the IMS domain if the timing duration is not reached and the re-registration in the IMS domain is successful.

6. The method according to claim 1 or 2, further comprising:
starting a counter, wherein the counter is configured to count, upon call cancellation of the electronic device in the IMS domain, re-registrations of the electronic device in the IMS domain; and
performing re-registration in the IMS domain.

7. The method according to claim 6, further comprising:
switching to a CS domain for redial and performing a voice call service in the CS domain if a preset count is reached and the re-registration in the IMS domain still fails; or
redialing in the IMS domain and performing a voice call service in the IMS domain if a preset count is not reached and the re-registration in the IMS domain is successful.

8. The method according to any one of claims 1 to 7, further comprising:
residing in a new radio (NR) system, and having registered in an NR IMS domain; or,
residing in a long term evolution (LTE) system, and having registered in an LTE IMS domain.

9. The method according to any one of claims 1 to 8, wherein the receiving an IMS domain call cancellation message specifically comprises:
receiving the IMS domain call cancellation message forwarded by an access network device from a core network device.

10. The method according to claim 9, wherein the access network device is an access network device of a 5^{th}-generation mobile communication (5G) network, or the access network device is an access network device of a 4^{th}-generation mobile communication (4G) network.

11. The method according to any one of claims 2 to 10, wherein the switching to a CS domain for redial when the cause information is second information specifically comprises:
selecting the CS domain;
sending an extended service request message to an LTE system, wherein the extended service request message is used for requesting the LTE system to issue a 2^{nd}-generation (2G) frequency point or a 3^{rd}-generation (3G) frequency point;
receiving the 2G frequency point or the 3G frequency point sent by the LTE system; and
initiating, in the CS domain, a call by using the 2G frequency point or the 3G frequency point.

12. A voice call method, applied to an access network device, the method comprising:
receiving an IMS domain call cancellation message sent by a core network device, wherein the IMS domain call cancellation message comprises cause information for indicating call cancellation in an IMS domain; and
forwarding the IMS domain call cancellation message to an electronic device, and enabling the electronic device to perform re-registration in the IMS domain when the cause information is first information, wherein the re-registration is used for performing, by the electronic device, a voice call service in the IMS domain, and the first information is used for indicating that an IMS service for the electronic device is restored within a first duration.

13. The method according to claim 12, wherein when the cause information is second information, the method further comprises:
enabling the electronic device to be switched to a CS domain for redial, wherein the redial is used for the electronic device to perform a voice call service in the CS domain, and the second information is used for indicating that the IMS service for the electronic device fails to be restored within the first duration.

14. The method according to claim 12 or 13, further comprising:
residing, by the electronic device, in an NR system, and having registered in an NR IMS domain; or,
residing, by the electronic device, in an LTE system, and having registered in an LTE IMS domain.

15. The method according to any one of claims 12 to 14, wherein the access network device is an access network device of a 5G network, or the access network device is an access network device of a 4G network.

16. The method according to claim 15, further comprising:
receiving, by the access network device of the 4G network, the IMS domain call cancellation message sent by the core network device, wherein the IMS domain call cancellation message comprises cause information for indicating call cancellation of the electronic device in an IMS domain; and
forwarding, by the access network device of the 4G network, the IMS domain call cancellation message to the electronic device.

17. The method according to claim 13, wherein the enabling the electronic device to be switched to a CS domain for redial when the cause information is second information specifically comprises:
receiving, by the access network device of the 4G network, an extended service request message sent by the electronic device, wherein the extended service request message is used for requesting the LTE system to issue a 2G frequency point or a 3G frequency point; and
sending, by the access network device of the 4G network, the 2G frequency point or the 3G frequency point to the electronic device, wherein the 2G frequency point or the 3G frequency point is used for initiating a call by the electronic device in the CS domain.

18. An electronic device, supporting a voice call service in an IMS domain and a CS domain, the electronic device comprising:
one or more processors; and
one or more memories, wherein
the one or more memories store one or more computer programs, the one or more computer programs comprise instructions, and when executed by the one or more processors, the instructions enable the electronic device to perform the method according to any one of claims 1 to 11.

19. An access network device, comprising:
one or more processors; and
one or more memories, wherein
the one or more memories store one or more computer programs, the one or more computer programs comprise instructions, and when executed by the one or more processors, the instructions enable the access network device to perform the method according to any one of claims 12 to 17.

20. A computer-readable storage medium, storing computer-executable program instructions, wherein when run on a computer, the computer-executable program instructions enable the computer to perform the method according to any one of claims 1 to 11 or any one of claims 12 to 17.
